# EUROPÄISCHE PATENTANMELDUNG

(11) **EP 4 322 124 A2**
(43) Veröffentlichungstag der Anmeldung: **14.02.2024**
(21) Anmeldenummer: 23220201.0
(22) Anmeldetag: 08.07.2021
(51) Int. Cl.: G07C 9/28

(54) **ERFASSUNGSVORRICHTUNG**

(30) Priorität: 09.07.2020 DE 202020103986 U
(62) Teilanmeldung aus: 21184629.0
(71) Anmelder: KEMAS Gesellschaft für Elektronik, Elektromechanik, Mechanik und Systeme mbH, 09353 Oberlungwitz (DE)
(72) Erfinder: Jürgen, Rabe, 09116 Chemnitz (DE); Uhlig, Silvio, 09123 Chemnitz (DE); Grämer, Björn, 09337 Hohenstein-Ernstthal (DE); Walosczyk, Ulrich, 09577 Niederwiesa (DE)
(74) Vertreter: Wenzel Nemetzade Warthmüller Patentanwälte Part mbB

(57) **Zusammenfassung**

Erfassungsvorrichtung, insbesondere für die Bulk-Erfassung von mit Transpondern versehenen Waren, mit wenigstens einer Leseeinrichtung zur berührungslosen Identifikation von Transpondern, mit einem Lesebereich, der zumindest abschnittsweise innerhalb der Reichweite der Leseeinrichtung verläuft und der für das manuelle Hindurchbewegen von Waren zur Bulk-Erfassung durch die Leseeinrichtung ausgebildet ist, und mit einer Signalgebereinrichtung zur Ausgabe wenigstens eines Beibehaltungs- und/oder Veränderungssignals betreffend die Warengeschwindigkeit und/oder -beschleunigung innerhalb des Lesebereichs.

## Beschreibung

Die vorliegende Erfindung betrifft eine Erfassungsvorrichtung, insbesondere für die Bulk-Erfassung von mit Transpondern versehenen Waren. Ferner wird auch ein Verfahren zur Bulk-Erfassung von Waren offenbart.

Es ist bekannt, Waren durch eine sogenannte Bulk-Erfassung, auch "Pulkerfassung" oder "Mehrfacherfassung" genannt, bei der nahezu gleichzeitig viele Transponder automatisiert identifiziert werden, um eine kostenverursachende Vereinzelung zu vermeiden. Logistikprozesse können hierdurch beschleunigt und vereinfacht werden. Für die Identifikation im Rahmen einer Bulk-Erfassung können beispielsweise RFID-Transponder verwendet werden, die berührungslos gelesen werden. Solche RFID-Transponder, insbesondere UHF-RFID-Transponder oder noch höherfrequente RFID-Transponder, können an den zu erfassenden Waren angebracht sein.

Bei der Bulk-Erfassung von Waren mit RFID-Transpondern ist die verhältnismäßig große Effizienz von Vorteil. Es kann jedoch nicht immer sichergestellt werden, dass sämtliche Waren zuverlässig erkannt werden. Dies gilt insbesondere bei der Durchfahrt durch oder entlang einer beidseitig offenen Erfassungsvorrichtung.

Bei einer großen Anzahl von RFID-Transpondern in dem jeweiligen Funkfeld kann sich eine verhältnismäßig hohe Wahrscheinlichkeit dafür ergeben, dass einzelne RFID-Transponder durch Interferenzen, Abschirmeffekte oder ungünstige Ausrichtung zu den Leseeinheiten der Erfassungsvorrichtung als Fehllesungen - auch als "negative false read" bezeichnet - nicht erkannt werden. Dies kann bei Stückgut zwar dadurch umgangen werden, dass dieses über ein Förderband durch oder entlang einer Erfassungseinrichtung gefahren wird, was wiederum einer Vereinzelung nahekommt. Im Fall von Palettenware, Stapelware oder Rollcontainern wäre dies nur mit großem Aufwand möglich.

Vor dem oben dargelegten Hintergrund lag der vorliegenden Erfindung die Aufgabe zu Grunde, eine Erfassungseinrichtung anzugeben, mit der die Erfassung von mit Transpondern versehenen Waren mit erhöhter Zuverlässigkeit, d.h. mit geringeren Fehllesungen, und gleichzeitig geringem Handhabungs- beziehungsweise Bedienaufwand vorgenommen werden kann. Diese Aufgabe ist durch eine Erfassungsvorrichtung gemäß Anspruch 1 gelöst worden. Vorteilhafte Ausgestaltungen sind Gegenstand der abhängigen Ansprüche.

Eine erfindungsgemäße Erfassungsvorrichtung ist insbesondere für die Bulk-Erfassung von mit Transpondern versehenen Waren ausgebildet, besonders bevorzugt für die Erfassung von Waren auf Paletten und/oder in Rollcontainern.

Eine derartige Erfassungsvorrichtung weist wenigstens eine Leseeinrichtung zur berührungslosen Identifikation von Transpondern, einen Lesebereich, der zumindest abschnittsweise innerhalb der Reichweite der Leseeinrichtung verläuft und der für das manuelle Hindurchbewegen von Waren zur Bulk-Erfassung durch die Leseeinrichtung ausgebildet ist, und mit einer Signalgebereinrichtung zur Ausgabe wenigstens eines Beibehaltungs- und/oder Veränderungssignals betreffend die Warengeschwindigkeit und/oder -beschleunigung innerhalb des Lesebereichs.

Durch die erfindungsgemäße Ausgestaltung der Erfassungsvorrichtung kann vermieden oder zumindest die Gefahr verringert werden, dass die jeweils zu erfassenden Waren zu früh aus dem Lesebereich entfernt werden und so eine nur unzureichende beziehungsweise unvollständige Erfassung erfolgt. Durch die Signalgebereinrichtung zur Ausgabe wenigstens eines Beibehaltungs- und/oder Veränderungssignals betreffend die Warengeschwindigkeit und/oder -beschleunigung kann insbesondere mit erhöhter Sicherheit gewährleistet werden, dass eine nahezu vollständige Erfassung sämtlicher Waren beziehungsweise der an den Waren angeordneten Transpondern vorgenommen wird und die jeweiligen Waren erst im Anschluss aus dem Lesebereich entfernt werden. Je nach Konfiguration der Signalgebereinrichtung lässt sich die Fehlerquote bei der Bulk-Erfassung von Waren signifikant verringern, wodurch Zeit und Kosten eingespart werden können.

Gleichzeitig können durch die Signalgebereinrichtung unerwünschte Beeinträchtigungen von Handhabungsprozessen entlang des Lesebereichs vermieden oder auf ein geringes Maß reduziert werden. Insbesondere lässt sich durch die erfindungsgemäße Signalgeberreinrichtung eine wirkungsvolle beziehungsweise intuitive Unterstützung für das Bedienpersonal bereitstellen, sodass auch ohne den Einsatz von physischen Barrieren eine gezielte Beeinflussung der Lesevorgangsdauer beziehungsweise der Verweildauer von Waren im Lesebereich erreicht werden kann. Insgesamt kann damit ein hohes Maß an Bedienerfreundlichkeit sichergestellt werden.

Gemäß einer bevorzugten Ausgestaltung der Erfassungsvorrichtung kann die Signalgebereinrichtung zur Ausgabe wenigstens eines Beibehaltungs- und/oder Veränderungssignals in Abhängigkeit einer Geschwindigkeits-, Beschleunigungs- und/oder Positionserfassung von Waren innerhalb des Lesebereichs ausgebildet sein. Die Erfassungsgüte eines Lesevorgangs kann auf diese Weise weiter verbessert werden. Insbesondere können Echtzeitdaten zur Warengeschwindigkeit, Warenbeschleunigung und/oder Warenposition bei der Ausgabe von Beibehaltungs- und/oder Veränderungssignalen durch die Signalgebereinrichtung berücksichtigt werden, wodurch die Genauigkeit und Effektivität der Beeinflussung der Warenbewegung durch den Lesebereich verbessert werden kann. Beispielsweise können auf diese Weise verhältnismäßig hohe Warengeschwindigkeiten im Lesebereich ein Verlangsamungssignal auslösen und damit dem jeweiligen Bedienpersonal eine Hilfestellung während des Lesevorgangs im Lesebereich liefern.

Gemäß einer weiter bevorzugten Ausgestaltung kann die Signalgebereinrichtung zur Ausgabe wenigstens eines Beibehaltungs- und/oder Veränderungssignals in Abhängigkeit einer bereits erfassten und/oder daraus abgeleiteten und/oder vorabberechneten Anzahl von Transpondern während eines Lesevorgangs innerhalb des Lesebereichs ausgebildet sein, insbesondere in Abhängigkeit einer erfassten und/oder daraus abgeleiteten und/oder vorabberechneten Anzahl von Transpondern während eines Lesevorgangs in einer Vorfeldzone und/oder einer Kernerfassungszone des Lesebereichs. Eine hohe Anzahl von bereits erfassten oder geschätzten Transpondern kann beispielsweise ein Verlangsamungssignal auslösen, um die verbliebene Lesevorgangsdauer beziehungsweise Verweildauer der Waren im Lesebereich zu verlängern. Die Erfassungsgüte wird hierdurch weiter verbessert.

In weiter bevorzugter Weise kann die Signalgebereinrichtung zur Ausgabe wenigstens eines Beibehaltungs- und/oder Veränderungssignals in Abhängigkeit des zeitlichen Verlaufs der Erfassung von Transpondern während eines Lesevorgangs innerhalb des Lesebereichs ausgebildet sein, insbesondere in Abhängigkeit eines zeitlichen Verlaufs der Erfassung von Transpondern während eines Lesevorgangs in einer Vorfeldzone und/oder einer Kernerfassungszone des Lesebereichs. Die Effizienz des Erfassungsprozesses lässt sich hierdurch weiter erhöhen. Beispielsweise kann die Taktrate der Erfassung von Transpondern beziehungsweise die Erfassungsanzahl von Transpondern pro Zeiteinheit als Indikator für die Gesamtanzahl von Transpondern im Lesebereich dienen. Ein solcher Indikator kann wiederum als Grundlage für die Ausgabe wenigstens eines Beibehaltungs- und/oder Veränderungssignals herangezogen werden.

Bei dem zeitlichen Verlauf der Erfassung von Transpondern kann es sich um eine Änderung der jeweils gelesenen Anzahl von Transpondern pro Zeiteinheit handeln. Bei einer Zeiteinheit kann es sich rein beispielhaft um eine Millisekunde handeln. Ebenso können einige oder wenige Millisekunden eine Zeiteinheit bilden.

In weiter bevorzugter Weise kann die Signalgebereinrichtung zur Ausgabe wenigstens eines Beibehaltungs- und/oder Veränderungssignals in Abhängigkeit einer vorab und/oder fortlaufend geschätzten und/oder qualitativ ermittelten Anzahl von Transpondern ausgebildet sein. Eine Vorabschätzung kann bereits zu einem frühen Zeitpunkt eine Signalausgabe der Signalgebereinrichtung auslösen, sodass die Erfassungssicherheit weiter verbessert werden kann. Die Vorabschätzung kann beispielsweise auf Grundlage von Liefer- oder Verpackungsdaten oder auch anhand der Größe eines Warenbehältnisses oder auf Grundlage empirischer Vergangenheits-Daten erfolgen. Eine fortlaufende Schätzung kann sich beispielsweise aus der Erfassungsgeschwindigkeit oder der Taktrate der Erfassung ergeben. Eine qualitativ ermittelte Anzahl kann dabei bereits für die Ausgabe eines Beibehaltungs- und/oder Veränderungssignals ausreichend sein und damit den Datenverarbeitungsaufwand gering halten.

Es kann weiter von Vorteil sein, wenn das Beibehaltungs- und/oder Veränderungssignal eine qualitative Ausprägung aufweist und/oder an eine Bedienperson gerichtet ist. Es kann sich bei dem Beibehaltungs- und/oder Veränderungssignal insbesondere um ein Signal an eine Bedienperson zur indirekten und/oder adaptiven Steuerung und/oder Beeinflussung der Warengeschwindigkeit und/oder -beschleunigung und/oder -verweilzeit innerhalb des Lesebereichs handeln. Ein solches Signal kann mit nur geringem Aufwand erzeugt werden und ermöglicht gleichzeitig eine verbesserte Erfassungsgüte für den jeweiligen Lesevorgang. Eine Bedienperson kann durch ein an sie gerichtetes Beibehaltungs- und/oder Veränderungssignal die Warengeschwindigkeit und/oder -beschleunigung innerhalb des Lesebereichs manuell anpassen. Dies gestattet eine indirekte adaptive Steuerung der Verweilzeit von Waren im Lesebereich mit nur geringem apparativem Aufwand.

In weiter bevorzugter Weise kann die Signalgebereinrichtung dazu ausgebildet sein, ein Beibehaltungs- und/oder Beschleunigungssignal auszugeben, wenn die Warenbewegung durch den Lesebereich, insbesondere in einer Vorfeldzone und/oder einer Kernerfassungszone des Lesebereichs, eine vordefinierte Geschwindigkeitsschwelle unterschreitet oder gleich ist. Eine Hindurchführung von Waren durch den Lesebereich kann somit ohne Handhabungsanpassungen erfolgen oder zwecks zügiger Prozessabfolge sogar beschleunigt werden.

Weiter bevorzugt kann die Signalgebereinrichtung dazu ausgebildet sein, ein Beibehaltungs- und/oder Beschleunigungssignal auszugeben, wenn ein Lesevorgang noch während des Hindurchbewegens von Waren durch den Lesebereich abgeschlossen ist oder abgeschlossen sein wird. Ein abgeschlossener Lesevorgang kann dadurch festgestellt werden, dass innerhalb eines vordefinierten Zeitraums keine weiteren Transponder identifiziert werden. Ferner kann mit Hilfe von Algorithmen prognostiziert werden, ob ein noch andauender Lesevorgang noch während des Lesevorgangs im Lesebereich abgeschlossen sein wird. Auch auf diese Weise lässt sich eine Hindurchführung von Waren durch den Lesebereich ohne Handhabungsanpassungen vornehmen oder zwecks zügiger Prozessabfolge sogar beschleunigen.

In weiter bevorzugter Weise kann die Signalgebereinrichtung dazu ausgebildet sein, ein Verlangsamungs- und/oder Entschleunigungssignal auszugeben, wenn die Warenbewegung durch den Lesebereich, insbesondere in einer Vorfeldzone und/oder einer Kernerfassungszone des Lesebereichs, eine vordefinierte Geschwindigkeitsschwelle überschreitet. Eine unvollständige Waren- beziehungsweise Transpondererfassung aufgrund eines zu schnellen Hindurchbewegens durch den Lesebereich kann hierdurch vermieden werden.

Weiter bevorzugt kann die Signalgebereinrichtung dazu ausgebildet sein, ein Verlangsamungs- und/oder Entschleunigungssignal auszugeben, wenn ein Lesevorgang bei oder nach Abschluss des Hindurchbewegens von Waren durch den Lesebereich unvollständig ist oder unvollständig sein wird. Eine solche Ausgestaltung kann ebenso dazu beitragen, eine unvollständige Waren- beziehungsweise Transpondererfassung bei sehr vielen Transpondern und/oder aufgrund einer zu hohen Warengeschwindigkeit im Lesebereich zu verhindern.

In besonders bevorzugter Weise kann das Beibehaltungs- und/oder Veränderungssignal ein optisches und/oder akustisches Signal an eine Bedienperson sein. Ein solches Signal kann mit geringem apparativem Aufwand erzeugt werden und gewährleistet eine gute Wahrnehmbarkeit durch den jeweiligen Bediener.

Weiter bevorzugt kann die Signalgebereinrichtung als Lichtlaufleiste ausgebildet sein, insbesondere zur Anzeige einer Soll-Durchfahrtsgeschwindigkeit und/oder Soll-Durchgangsgeschwindigkeit beziehungsweise Soll-Warengeschwindigkeit durch den Lesebereich. Durch die Geschwindigkeit beziehungsweise Veränderungsrate des An- und Abschaltens unterschiedlicher Lichtquellen entlang der Lichtlaufleiste kann eine Sollgeschwindigkeit simuliert dargestellt beziehungsweise wiedergegeben und von einer Bedienperson intuitiv wahrgenommen werden. Die Nutzerfreundlichkeit kann auf diese Weise weiter verbessert werden.

Noch weiter bevorzugt kann die Signalgebereinrichtung zur Darstellung von Signalen unterschiedlicher Farbe, Wiederholgeschwindigkeiten, Taktfrequenzen, Leuchtintensitäten und/oder Darstellungslängen ausgebildet sein. Hierdurch kann ein hohes Maß an Darstellungsflexibilität erzielt werden, sodass mit der Signalgebereinrichtung viele Verschiedene Zustände dargestellt oder Informationen an einen Bediener übermittelt werden können.

Gemäß einer noch weiter bevorzugten Ausführungsform kann die Signalgebereinrichtung zur Darstellung von Texten, Textabschnitten, Sätzen, Buchstaben und/oder Zahlen ausgebildet sein. Insbesondere kann die Signalgebereinrichtung zur Darstellung von Laufschriften ausgebildet sein, bevorzugt Laufschriften aus Texten, Textabschnitten, Sätzen, Buchstaben und/oder Zahlen. Hierdurch kann ein weiter erhöhtes Maß an Darstellungsflexibilität erzielt werden, sodass mit der Signalgebereinrichtung ein weiter gesteigerter Informationsgehalt an einen Bediener übermittelt werden kann.

Ferner kann die Signalgebereinrichtung zur Darstellung von Texten, Textabschnitten, Sätzen, Buchstaben und/oder Zahlen beziehungsweise Laufschriften in unterschiedlichen Farben, Wiederholgeschwindigkeiten, Taktfrequenzen, Leuchtintensitäten und/oder Darstellungslängen ausgebildet sein. Die Darstellungsflexibilität und Informationsdichte lässt sich hierdurch noch weiter erhöhen.

Ferner kann die Signalgebereinrichtung zur Darstellung einer Anzahl von Signalen entlang der Warenbewegungsrichtung ausgebildet sein. Dies kann in besonders vorteilhafter Weise durch eine Lichtlaufleiste bewerkstelligt werden. Dabei kann eine Lichtlaufleiste mit nur einfachem konstruktivem Aufwand entlang einer Durchgangs-, Durchfahrts- beziehungsweise Warenbewegungsrichtung verlaufend angeordnet werden, wodurch die intuitive Bedienung weiter verbessert wird.

Schließlich ist es auch möglich, dass die Signalgebereinrichtung zur Darstellung einer Countdown Anzeige ausgebildet ist. Eine derartige Countdown Anzeige kann nach Art einer herunterzählenden Ampel ausgestaltet sein, was ebenfalls leicht wahrgenommen werden kann und gleichzeitig mit nur geringen Kosten in einer erfindungsgemäßen Erfassungsvorrichtung realisierbar ist.

Durch geeignete Darstellungsweisen und/oder Darstellungsinhalte lässt sich in besonders vorteilhafter Weise ein Nutzer der Erfassungsvorrichtung zu einem bestimmten Bedienverhalten animieren und/oder ein etwaiges Verhalten kann in vorteilhafter Weise mit nur geringem Aufwand suggeriert werden.

Es kann weiterhin von Vorteil sein, wenn der Lesebereich wenigstens abschnittsweise durch eine Tunnelstruktur begrenzt wird, wobei die Tunnelstruktur bevorzugt einen offenen Eingang und/oder einen offenen Ausgang aufweist. Eine solche Tunnelstruktur kann einfach, insbesondere ohne Betätigung von Türen oder anderweitigen Barrieren, durchschritten und/oder durchfahren werden und ist damit bedienerfreundlich.

Gemäß einer weiter bevorzugten Ausgestaltung kann eine Tunnelstruktur den Lesebereich zumindest abschnittsweise seitlich und/oder dachseitig begrenzen. Ferner kann der Lesebereich während eines Lesevorgangs zumindest durch eine Tunnelstruktur abgeschirmt sein, insbesondere seitlich und/oder dachseitig gegenüber elektromagnetischen Signalen abgeschirmt sein. Durch eine solche Ausgestaltung kann die Erfassungsgüte weiter verbessert werden, insbesondere die Gefahr von Falschlesungen außerhalb der Abschirmungen verringert werden.

Die Tunnelstruktur kann modular und/oder variabel ausgebildet sein, insbesondere zur variablen Anpassung durch eine Bedienperson. Beispielsweise können Abschnitte oder Bereiche der Tunnelstruktur eine variable Länge aufweisen und/oder klappbare und/oder ausziehbare Wände aufweisen. Ebenso ist es möglich, dass die Tunnelstruktur zumindest abschnittsweise frei von Dachabschnitten ausgebildet ist und/oder je nach Anwendungskonfiguration abschnittsweise frei von Dachabschnitten ausgebildet ist. Dementsprechend kann die Tunnelstruktur je nach Konfiguration in vordefinierten Bereichen frei von einer dachseitigen Begrenzung ausgeführt sein.

Der Lesebereich und/oder die Tunnelstruktur kann in besonders vorteilhafter Weise für das Hindurchtreten durch eine Bedienperson oder durch mehrere Bedienpersonen ausgebildet und/oder dimensioniert sein. Warenübergabe- oder Handhabungsprozesse an oder im Bereich der Tunnelstruktur lassen sich hierdurch vermeiden. Insbesondere kann das jeweilige Bedienpersonal die zu erfassenden Waren beim Hindurchtreten mitführen und dadurch die Erfassung von Warentranspondern während des Lesevorgangs ermöglichen.

Weiter bevorzugt können der Eingang und der Ausgang der Tunnelstruktur in Warenbewegungsrichtung gegenüberliegend angeordnet sein. Ferner kann die Tunnelstruktur einen geradlinig verlaufenden Durchgang definieren. Ein Hindurchgehen oder Hindurchschieben von Waren durch die Tunnelstruktur beziehungsweise durch den Lesebereich kann auf diese Weise besonders einfach und mit wenig Handhabungsaufwand erfolgen. Umlenkungen oder Richtungsänderungen innerhalb der Tunnelstruktur oder innerhalb des Lesebereichs können entfallen.

Weiter bevorzugt kann der Lesebereich und/oder die Tunnelstruktur für das manuelle und/oder semimanuelle Hindurchschieben eines Rollbehälters und/oder Gitterwagens und/oder eines standardisierten Transportbehälters und/oder von Stapelware, insbesondere in standardisierten Gebinden, durch eine Bedienperson oder durch mehrere Bedienpersonen ausgebildet und/oder dimensioniert sein. Das Umladen von Waren zwischen unterschiedlichen Behältnissen kann somit vermieden werden, wodurch der Bedienaufwand weiter verringert werden kann.

Insbesondere kann der Lesebereich und/oder die Tunnelstruktur für das manuelle und/oder semimanuelle Hindurchschieben eines Rollbehälters und/oder Gitterwagens mit einer Aufnahmekapazität von bis zu 1000 Wäschestücken, bevorzugt von bis zu 600 Wäschestücken oder von bis zu 500 Wäschestücken, durch eine Bedienperson oder durch mehrere Bedienpersonen ausgebildet und/oder dimensioniert sein. Mit einem Lesevorgang lassen sich somit eine hohe Zahl an Transpondern erfassen, sodass die Betriebseffizienz der Erfassungsvorrichtung weiter verbessert werden kann. Eine entsprechende Ausbildung und/oder Dimensionierung kann auch im Hinblick auf andere Waren und/oder andere Anzahlen von Waren vorgenommen werden.

Der Lesebereich und/oder die Tunnelstruktur kann eine lichte Breite von mindestens 0,5 m, mindestens 1 m oder mindestens 1,25 m und/oder von weniger als 3 m, weniger als 2 m, besonders bevorzugt von 1,5 m, aufweisen. Ferner kann der Lesebereich und/oder die Tunnelstruktur eine lichte Höhe von mindestens 1,5 m, mindestens 1,75 m oder mindestens 1,9 m und/oder von weniger als 2,5 m, weniger als 2,25 m, besonders bevorzugt von 2 m, aufweisen. Schließlich kann die Tunnelstruktur eine Länge von mindestens 1,5 m, mindestens 2 m oder mindestens 2,5 m und/oder von weniger als 5 m, weniger als 4 m, besonders bevorzugt von etwa 3 m, aufweisen. Derartige Abmessungen ermöglichen das Hindurchführen von verhältnismäßig groß dimensionierten Behältnissen bei gleichzeitig ausreichend langem Lesebereich. Ein Lesebereich mit einer solchen Länge gestattet eine ausreichende Verweildauer, innerhalb der die Warentransponder mit verhältnismäßig großer Sicherheit vollständig erfasst werden können.

Gemäß einer weiter bevorzugten Ausgestaltung weist der Lesebereich wenigstens eine Kernerfassungszone für die Erfassung von Transpondern durch die Leseeinrichtung auf, wobei die Kernerfassungszone bevorzugt vollständig innerhalb der Tunnelstruktur angeordnet ist und/oder eine geringe Länge aufweist als die Tunnelstruktur. Eine Kernerfassungszone kann mithin einen Teil des Lesebereichs bilden und zur Haupterfassung von Transpondern ausgebildet beziehungsweise eingerichtet sein. Die primäre Ausgestaltung einer Kernerfassungszone für die Transpondererfassung kann die Gesamterfassungsgüte und damit die Betriebssicherheit der Erfassungsvorrichtung weiter verbessern. Dementsprechend kann das Erfassungsergebnis eines Lesevorgangs primär durch Transpondererfassungen in der Kernerfassungszone erzeugt und gegebenenfalls durch Erfassungen außerhalb der Kernerfassungszone korrigiert und/oder ergänzt werden.

In noch weiter bevorzugter Weise kann der Lesebereich durch wenigstens eine Reflexions- und/oder Absorptionszone unterbrochen sein, insbesondere zur gezielten Reflexion und/oder Absorption elektromagnetischer Strahlung und/oder von Feldern aus der Kernerfassungszone. Transpondererfassungen beziehungsweise die Erfassungsgüte innerhalb der Kernerfassungszone lassen sich auf diese weiter verbessern. Insbesondere kann durch eine Reflexions- und/oder Absorptionszone die Gefahr verringert werden, dass von der Kernerfassungszone durch Reflexionen auch Transponder außerhalb der Kernerfassungszone detektiert werden und dann als sogenannte Positiv-Falschlesungen das Erfassungsergebnis verfälschen.

Eine voranstehend beschriebene Reflexions- und/oder Absorptionszone kann zusätzlich oder alternativ auch als Störzone ausgebildet sein, insbesondere zur gezielten Störung elektromagnetischer Strahlung und/oder von Feldern aus der Kernerfassungszone. Transpondererfassungen beziehungsweise die Erfassungsgüte innerhalb der Kernerfassungszone lassen sich auch auf diese weiter verbessern. Dementsprechend kann eine solche Zone als Reflexionszone und/oder Absorptionszone und/oder Störzone ausgebildet sein. Im Folgenden wird jedoch lediglich auf Reflexions- und/oder Absorptionszone Bezug genommen, wenngleich eine an die Kernerfassungszone angrenzende Zone auch ausschließlich als Störzone oder nur zusätzlich als Störzone ausgebildet sein kann.

Weiter bevorzugt kann der Lesebereich durch mehrere Reflexions- und/oder Absorptionszonen unterbrochen sein. Es ist möglich, dass eine Kernerfassungszone zwischen zwei und/oder angrenzend an zwei Reflexions- und/oder Absorptionszonen angeordnet ist. Es können somit Reflexionen und/oder Absorptionen beidseitig der Kernerfassungszone zu einer Verbesserung der Erfassungsgüte beitragen.

Es kann weiter von Vorteil sein, wenn wenigstens eine Reflexions- und/oder Absorptionszone frei von Leseeinrichtungen ausgebildet ist. Innerhalb der wenigstens einen Reflexions- und/oder Absorptionszone kann dementsprechend eine Transpondererfassung ausbleiben. Auf diese Weise kann eine Transpondererfassung auf die Kernerfassungszone konzentriert werden beziehungsweise eine geeignete Differenzierung zwischen Transpondererfassungen innerhalb der Kernerfassungszone und gegebenenfalls weiteren vorhandenen Zonen außerhalb der Reflexions- und/oder Absorptionszone vorgenommen werden.

Die wenigstens eine Reflexions- und/oder Absorptionszone kann bevorzugt vollständig innerhalb der Tunnelstruktur angeordnet sein und/oder eine geringe Länge aufweisen als die Tunnelstruktur. Ein etwaiges Reflexions- und/oder Absorptionsverhalten kann auf diese Weise besonders effektiv bewerkstelligt werden.

In weiter bevorzugter Ausgestaltung kann die Tunnelstruktur für eine Anpassung der Reflexions- und/oder Absorptionszone modular und/oder variabel ausgebildet sein, insbesondere zur variablen Anpassung der Reflexions- und/oder Absorptionszone durch eine Bedienperson. Beispielsweise kann zumindest eine Reflexions- und/oder Absorptionszone eine variable Länge aufweisen und/oder durch klappbare und/oder ausziehbare Wände begrenzt sein. Ebenso ist es möglich, dass die Reflexions- und/oder Absorptionszone zumindest abschnittsweise frei von Dachabschnitten ausgebildet sein.

Gemäß einer noch weiter bevorzugten Ausgestaltung kann der Lesebereich wenigstens eine unabhängig von einer Kernerfassungszone und/oder unabhängig von einer Reflexions- und/oder Absorptionszone ausgebildete Vorfeldzone aufweisen, insbesondere eine außerhalb der Tunnelstruktur angeordnete Vorfeldzone.

Besonders bevorzugt kann der Lesebereich wenigstens eine Vorfeld-Eingangszone und/oder eine Vorfeld-Ausgangszone aufweisen, insbesondere eine Vorfeld-Eingangszone vor einem Eingang der Tunnelstruktur und/oder eine Vorfeld-Ausgangszone hinter einem Ausgang der Tunnelstruktur.

Durch eine solche Vorfeldzone, insbesondere Vorfeld-Eingangszone und/oder Vorfeld-Ausgangszone, kann die Gesamtfunktionalität der Erfassungsvorrichtung weiter verbessert werden. So lassen sich einer solchen Vorfeldzone weitere Funktionalitäten beziehungsweise Prozessabfolgen zuordnen, durch die eine Gesamterfassungsgüte von Transpondern durch einen Lesevorgang erhöht wird.

Eine derartige Vorfeldzone kann zum erfindungsgemäß vorgesehenen Lesebereich gehören. Ein aus Kernerfassungszone und Vorfeldzone gebildeter Lesebereich kann in diesem Fall durch eine Reflexions- und/oder Absorptionszone unterbrochen oder aufgeteilt sein.

Eine Kernerfassungszone des Lesebereichs kann zwischen zwei Reflexions- und/oder Absorptionszonen angeordnet sein. Insbesondere kann zumindest eine Reflexions- und/oder Absorptionszone zwischen zwei Vorfeldzonen angeordnet sein und/oder jeweils eine Vorfeldzone kann angrenzend an eine Reflexions- und/oder Absorptionszone angeordnet sein. Es kann somit in geeigneter Weise zwischen Prozessabfolgen in einer Vorfeldzone und einer Kernerfassungszone differenziert werden.

In noch weiter bevorzugter Weise kann eine Vorfeldzone und/oder einer Kernerfassungszone des Lesebereichs einstellbar und/oder konfigurierbar sein, insbesondere in Bezug auf die Größe und/oder Flächenausdehnung und/oder Position. Die Betriebsweise einer Vorfeldzone und/oder einer Kernerfassungszone kann parametrierbar sein. Durch Einstellung einer Leseeinheit, beispielsweise durch Ausrichtung und/oder Fokussierung der Antenne kann die Antennencharakteristik optimiert werden, womit die Größe und/oder Flächenausdehnung und/oder Position einer Vorfeldzone und/oder einer Kernerfassungszone eingestellt beziehungsweise konfiguriert werden kann.

In noch weiter bevorzugter Weise kann wenigstens eine Vorfeldzone des Lesebereichs als definierte Halte- und/oder Parkverbotszone für Waren, insbesondere für passagefremde Waren, und/oder als definierte Halte- und/oder Parkverbotszone für Warenbehälter und/oder Bedienpersonen ausgebildet sein. Die Zuordnung von unerwünschten Waren, Warenbehälter oder Personen zu einem Lesevorgang kann auf diese Weise vermieden werden. Dies kann beispielsweise durch eine geeignete Markierung als Halte- und/oder Parkverbotszone bewerkstelligt werden. Ferner kann unerwünschtes Halten und Parken in einer solchen Zone eine Alarmsignalausgabe auslösen, sodass etwaiges Bedienpersonal zur Entfernung aus der Halte- und/oder Parkverbotszone angewiesen wird.

In weiter bevorzugter Weise kann wenigstens eine Vorfeldzone des Lesebereichs für die Erfassung von Transpondern ausgebildet sein. Durch eine Transpondererfassung in einer Vorfeldzone des Lesebereichs lässt sich eine weiter verbesserte Funktionalität erzielen. Insbesondere können Transpondererfassungen in einer Vorfeldzone für die Verbesserung der Gesamterfassungsgüte genutzt werden.

Es kann weiter von Vorteil sein, wenn die wenigstens eine Vorfeldzone des Lesebereichs als Sicherheitszone ausgebildet ist, insbesondere für die Erfassung und/oder Korrektur von Falschlesungen vor, während und/oder nach einem Lesevorgang in einer Kernerfassungszone. Beispielsweise kann die Prozesssicherheit hierdurch noch weiter verbessert werden, was zu einer erhöhten Gesamterfassungsgüte führt.

Ebenso kann es von Vorteil sein, wenn die wenigstens eine Vorfeldzone des Lesebereichs als Störzone ausgebildet ist, um etwaige nicht zum gewünschten Erfassungsumfang gehörenden Transponder - sogenannte parasitäre Transponder - durch gezielte Störsignale in der jeweiligen Vorfeldzone nicht identifizierbar zu machen, insbesondere durch die Kernerfassungszone nicht identifizierbar zu machen, und damit die Erfassungsgüte zu verbessern.

Wenigstens eine Vorfeldzone des Lesebereichs kann für die qualitative Vorerfassung einer Transponderanzahl ausgebildet sein, insbesondere bei Beginn einer Passage durch den Lesebereich. In einer solchen Vorfeldzone kann beispielsweise qualitativ bestimmt werden, ob sich in einem der Kernerfassungszone nahenden Warenbehälter eine geringe, mittlere oder hohe Anzahl von Waren mit Transpondern befinden. Der Lesevorgang in der Kernerfassungszone beziehungsweise die Ausgabe durch die Signalgebereinrichtung kann in Abhängigkeit einer solchen qualitativen Erfassung beeinflusst werden. Auf diese Weise kann zu einem verhältnismäßig frühen Zeitpunkt Einfluss auf den Lesevorgang beziehungsweise auch auf die Warenbewegung während des Lesevorgangs genommen und damit die Gesamterfassungssicherheit innerhalb des Lesebereichs begünstigt werden.

In weiter bevorzugter Weise kann wenigstens eine Vorfeldzone des Lesebereichs für die Erfassung von Fremdobjekten und/oder Fremdtranspondern und/oder unzulässigen Behältern und/oder Behälterarten und/oder einer unzulässigen Behälteranzahl ausgebildet sein. Dies erlaubt beispielsweise, dass passagefremde Waren und/oder nicht-freigegebene Warenbehälter und/oder Bedienpersonen erkannt werden und ein Signal zur Entfernung aus der Vorfeldzone ausgegeben wird. Die Betriebssicherheit kann auf diese Weise weiter verbessert werden.

Gemäß einer weiter bevorzugten Ausführungsform kann wenigstens eine Vorfeldzone des Lesebereichs für die Geschwindigkeits-, Beschleunigungs- und/oder Positionserfassung von Waren ausgebildet sein, insbesondere zur Vorkonfiguration eines Lesevorgangs innerhalb einer Kernerfassungszone und/oder zur Vorkonfiguration der Signalgebereinrichtung. Es können auf diese Weise bereits vor dem Betreten und/oder Hindurchfahren durch eine Kernerfassungszone Informationen zur Geschwindigkeit und/oder Beschleunigung beziehungsweise Position von Waren für einen jeweiligen Lesevorgang gesammelt werden, um die weiteren Prozesse eines Lesevorgangs zu optimieren.

Weiter bevorzugt kann eine Lesevorgangsdauer innerhalb des Lesebereichs, insbesondere innerhalb einer Kernerfassungszone des Lesebereichs, zur Erzielung einer Erfassungsrate von wenigstens 90%, insbesondere von mehr als 95%, weiter bevorzugt von mehr als 99%, besonders bevorzugt von mehr als 99,9% eingestellt sein. Die im jeweiligen Anwendungsfall noch akzeptable Fehlerquote kann auf diese Weise im Hinblick auf einen wirtschaftlichen Betrieb der Erfassungsvorrichtung auf das jeweils gewünschte Maß eingestellt werden.

Gemäß einer weiter bevorzugten Ausgestaltung kann eine Begrenzungseinrichtung vorgesehen sein, die dazu eingerichtet ist, den Ausgang von Waren aus dem Lesebereich und/oder die Entfernung der Waren aus dem Lesebereich in Abhängigkeit einer bereits erfassten und/oder geschätzten Anzahl von Transpondern während eines Lesevorgangs innerhalb des Lesebereichs zu blockieren und/oder erst nach Abschluss eines Lesevorgangs innerhalb des Lesebereichs freizugeben.

Durch eine solche Ausgestaltung der Erfassungsvorrichtung kann mit weiter erhöhter Sicherheit vermieden werden, dass die jeweils zu erfassenden Waren zu früh aus dem Lesebereich entfernt werden und so eine nur unzureichende beziehungsweise unvollständige Erfassung erfolgt. Insbesondere kann die Begrenzung des Ausgangs beziehungsweise die Begrenzung der Position der Waren im Lesebereich während eines noch andauernden Lesevorgangs sicherstellen, dass eine vollständige Erfassung sämtlicher Waren beziehungsweise der an den Waren angeordneten Transpondern vorgenommen wird und die Waren erst im Anschluss aus dem Lesebereich entfernt werden. Die Fehlerquote kann hierdurch signifikant verringert werden.

In weiter bevorzugter Weise kann die Begrenzungseinrichtung als Eingangs- oder Ausgangstür, Eingangs- oder Ausgansgitter oder Eingangs- oder Ausgangsschranke oder als metallisierter Vorhang oder Vorhangstreifen ausgebildet sein, der/die bevorzugt verschiebbar, schwenkbar und/oder rollbar ist und/oder wobei die Begrenzungseinrichtung zwischen einer den Ausgang des Lesebereichs begrenzenden Begrenzungsposition und einer den Eingang oder Ausgang freigebenden Freigabeposition bewegt werden kann. Eine solche Ausgestaltung ist kostengünstig realisierbar und einfach in der Bedienung bei gleichzeitig hoher Betriebssicherheit.

Es kann weiter von Vorteil sein, wenn die Begrenzungseinrichtung als Stoppelement und/oder Pollerelement und/oder als Wippe, insbesondere als Stoppschiene, ausgebildet ist, bevorzugt im bodennahen Bereich, und/oder wobei das Stoppelement und/oder Pollerelement verschiebbar und/oder schwenkbar und/oder kippbar ist, besonders bevorzugt zwischen einer aus dem Boden ragenden Begrenzungsposition und einer innerhalb des Bodens angeordneten Freigabeposition bewegt werden kann. Auf diese Weise kann die Position von Waren und/oder eines Transportbehältnisses beziehungsweise einer Palette oder eines Rollcontainers mit geringem konstruktivem Aufwand temporär begrenzt werden.

Gemäß einer noch weiter bevorzugten Ausgestaltung kann die Leseeinrichtung dazu eingerichtet sein, den Lesevorgang abzubrechen und/oder das Leseergebnis zu verwerfen, wenn die zu erfassenden Waren den Ausgang des Lesebereichs vor vollständigem Abschluss des Lesevorgangs passieren. Im Falle einer etwaigen Fehlbedienung der Erfassungsvorrichtung wird auf diese Weise verhindert, dass weitere Logistikprozesse auf Grundlage unvollständiger Erfassungsergebnisse fortgeführt werden. Beispielsweise kann bei einem Abbruch ein Signal ausgebeben werden, durch das der jeweilige Bediener zur Wiederholung des Lesevorgangs oder/und der Passage aufgefordert wird. Unter Passage kann hier die Abfolge sämtlicher Schritte zur Erfassung von mit Transpondern versehenen Waren eines Containers oder eines Gebindes oder einer vordefinierten Gruppe von Waren verstanden werden.

Noch weiter bevorzugt kann die Leseeinrichtung wenigstens eine Leseeinheit aufweisen, vorzugsweise eine Mehrzahl von Leseeinheiten. Mit einer Mehrzahl von derartigen Leseeinheiten kann eine weiter verbesserte Erfassungssicherheit beziehungsweise eine verbesserte Effizienz im Betrieb erreicht werden. Die zumindest eine Leseeinheit kann bevorzugt als Antenne ausgebildet sein, insbesondere zur Erfassung von RFID-Transpondern. Solche Leseeinheiten beziehungsweise Antennen sind kostengünstig und mit geringem Aufwand in eine voranstehend erwähnte Tunnelstruktur zu integrieren.

Noch weiter bevorzugt kann die Leseeinrichtung eine Mehrzahl von Leseeinheiten aufweisen, die in und/oder zur Erfassung in unterschiedlichen Zonen des Lesebereichs angeordnet sind, insbesondere in einer Kernerfassungszone sowie zur Erfassung in wenigstens einer Vorfeldzone. Auf diese Weise lassen sich Erfassungsergebnisse aus unterschiedlichen Zonen des Lesebereichs gut differenzieren und entsprechend der Zone für die weitere Datenverarbeitung geeignet zuordnen.

Besonders bevorzugt weist die Leseeinrichtung mehrere als Antennen, insbesondere aktive Antennen, ausgebildete Leseeinheiten in einer Kernerfassungszone des Lesebereichs auf. Innerhalb der Kernerfassungszone kann auf diese Weise eine besonders hohe Erfassungssicherheit gewährleistet werden.

Noch weiter bevorzugt kann die Leseeinrichtung jeweils mindestens eine als aktive oder passive Richtantenne ausgebildete Leseeinheit für die Erfassung und/oder zur gezielten Störung oder temporären Deaktivierung in einer Vorfeldzone des Lesebereichs aufweisen. Durch den Einsatz einer Richtantenne kann auch in einer ansonsten nicht abgeschirmten Vorfeldzone eine fokussierte Transpondererfassung vorgenommen werden.

Nach einer weiteren Ausführungsform kann die Erfassungsvorrichtung wenigstens eine Sensorvorrichtung aufweisen, insbesondere einen Positionssensor, zur Erfassung einer Waren- und/oder Behälterposition und/oder zur Geschwindigkeits- und/oder Beschleunigungserfassung innerhalb des Lesebereichs, insbesondere innerhalb einer Kernerfassungszone, einer Vorfeldzone und/oder einer Reflexions- und/oder Absorptionszone. Eine solche Sensorvorrichtung ist kostengünstig in der Anschaffung und gewährleistet gleichzeitig ein hohes Maß an Funktionssicherheit bei der Erfassung der jeweils zu messenden Größe.

Gemäß einer weiter bevorzugten Ausgestaltung weist die Erfassungsvorrichtung wenigstens einen Laser-Entfernungssensor zur Erfassung einer Waren- und/oder Behälteranwesenheit und/oder -position und/oder zur Geschwindigkeits- und/oder Beschleunigungserfassung innerhalb des Lesebereichs auf, insbesondere innerhalb einer Kernerfassungszone, einer Vorfeldzone und/oder einer Reflexions- und/oder Absorptionszone. Erfassungsergebnisse eines solchen Sensors können in besonders vorteilhafter Weise als Grundlage für die Signalausgabe der Signalgebereinrichtung dienen oder als Eingangsgröße durch die Signalgebereinrichtung Berücksichtigung finden.

In noch weiter bevorzugter Ausgestaltung weist die Erfassungsvorrichtung wenigstens eine Bedieneinrichtung für die Nutzerbedienung vor, während und/oder nach einem Lesevorgang auf, insbesondere zur Wahl eines Betriebsmodus, zur Anzeige eines Erfassungsergebnisses, einer Korrektur, für das Quittieren, für das Einlesen von Lieferscheinen und/oder für die Erfassung von Personendaten des Bedienenden. Auf diese Weise kann die Bedienung der Erfassungsvorrichtung weiter vereinfacht werden. Durch eine solche Bedieneinrichtung lässt sich insbesondere eine intuitive Bedienung vor, während und/oder nach Abschluss eines Lesevorgangs realisieren.

Weiter bevorzugt weist die Leseeinrichtung eine RFID-Lesevorrichtung und/oder eine Steuereinheit und/oder eine Auswerteeinheit auf, sodass eine Reproduzierbarkeit der Lese- und Auswertevorgänge gewährleistet werden kann. Vorzugsweise können in der Steuereinheit und/oder eine Auswerteeinheit die Steuerprofile der Erfassungsverläufe mit einer hohen Erfassungsrate, in Abhängigkeit vom Anwendungsfall, als Referenzmodelle abgespeichert werden. Die Referenzmodelle können u.a. auf den Parametern wie Position der Ware im Erfassungsbereich, Verfahrensgeschwindigkeits-Profil, Antennenauswahl, Modulationsprinzip, Antennentaktung und/oder Lesezykluszahl basieren.

Es kann weiter von Vorteil sein, wenn die RFID-Lesevorrichtung und/oder die Steuer- und/oder Auswerteeinheit an eine übergeordnete IT-Struktur, bevorzugt umfassend zumindest eine Datenbank, angebunden ist. Die Funktionalität der Erfassungsvorrichtung kann hierdurch in geeigneter Weise an den jeweiligen Anwendungsfall angepasst werden.

Noch weiter bevorzugt kann die Leseeinrichtung eine Steuer- und/oder Auswerteeinheit aufweisen, die mit einem Modul für künstliche Intelligenz ausgestattet ist, insbesondere zur Ansteuerung der Leseeinheiten, der Signalgebereinrichtung, der Bedieneinrichtung, der Sensoren. Die Erfassungsgüte eines Lesevorgangs kann somit im Betrieb der Erfassungsvorrichtung schrittweise verbessert und optimiert werden, insbesondere durch selbstlernende Prozesse der Steuer- und/oder Auswerteeinheit.

Schließlich kann in bevorzugter Weise die Steuer- und/oder Auswerteeinheit und/oder das KI-Modul zur Analyse, Filterung, Bewertung, Korrekturberechnung, Speicherung und/oder eigenständiger Entscheidung und/oder intelligenter selbstlernender eigenständiger Entscheidung und/oder Übermittlung erfasster und/oder vorberechneter und/oder berechneter Daten an übergeordnete IT-Struktur ausgebildet sein. Eine solche Übertragung erfolgt vorzugsweise erst nach abgeschlossenem Lesevorgang. Durch eine solche Übertragung an eine übergeordnete IT-Struktur kann eine dezentrale Datenverarbeitung und/oder Datenoptimierung erfolgen, sodass im Einsatz einer Vielzahl von Erfassungsvorrichtungen eine kontinuierliche Betriebsoptimierung implementiert werden kann.

Insbesondere kann die Steuer- und/oder Auswerteeinheit und/oder das KI-Modul zur eigenständigen Analyse, Filterung, Bewertung, Prognose, Korrekturberechnung, Speicherung und/oder eigenständiger Entscheidung und/oder intelligenter selbstlernender eigenständiger Entscheidung und/oder Übermittlung erfasster und/oder vorberechneter und/oder berechneter Daten an übergeordnete IT-Struktur ausgebildet sein.

Gemäß einer noch weiter bevorzugten Ausführungsform kann wenigstens eine Vorfeldzone und/oder eine Vorfeldaußenzone des Lesebereichs für die Personenidentifikation ausgebildet sein, insbesondere zur Vorkonfiguration eines Lesevorgangs innerhalb einer Kernerfassungszone und/oder zur Vorkonfiguration der Signalgebereinrichtung. Dementsprechend kann die Leseeinrichtung zur Personenidentifikation in einer Vorfeldzone und/oder in einer Vorfeldaußenzone eingerichtet sein.

Auf diese Weise können bereits vor dem Betreten und/oder Hindurchfahren durch eine Kernerfassungszone Informationen zur jeweiligen Bedienperson, insbesondere gespeicherte Personenbewegungsdaten und/oder gespeicherte Gestik- und/oder Motorik-Informationen, für den jeweiligen Lesevorgang abgerufen werden, um auf der Grundlage des Vergleichs von Online-Bewegungs-Daten mit abgerufenen gespeicherten Daten der Vergangenheit die weiteren Prozesse eines Lesevorgangs zu optimieren beziehungsweise eine Vorkonfiguration vorzunehmen.

Eine Vorfeldaußenzone kann unmittelbar an eine Vorfeldzone angrenzen und/oder zumindest teilweise mit einer Vorfeldzone überlappend ausgebildet sein. Ebenso kann eine Vorfeldaußenzone zwischen einer Vorfeldzone und einer Außenzone ausgebildet sein. Schließlich kann eine Vorfeldaußenzone zumindest teilweise überlappend mit einer Außenzone ausgebildet sein.

Innerhalb einer Vorfeldzone und/oder einer Vorfeldaußenzone kann eine Personenidentifikation durch automatisierte Erkennung erfolgen. Beispielsweise kann eine Leseeinheit und/oder ein Sensor der Leseeinrichtung für die automatisierte Erkennung von Personen in einer Vorfeldzone und/oder einer Vorfeldaußenzone eingerichtet sein, insbesondere für die automatisierte Erkennung auf Grundlage von Bewegungsdaten, Gestik- und/oder Motorik-Informationen und/oder für die automatisierte Erkennung durch automatisierte Gesichtserkennung. Bei einer Leseeinheit für die Personenidentifikation kann es sich um eine Einheit für die laser- und/oder kamerabasierte Identifikation handeln.

Wie voranstehend erwähnt, kann die Leseeinrichtung eine Steuer- und/oder Auswerteeinheit aufweisen, die mit einem Modul für künstliche Intelligenz ausgestattet ist, insbesondere zur Ansteuerung der Leseeinheiten, der Signalgebereinrichtung, der Bedieneinrichtung, der Sensoren. Ein solches Modul für künstliche Intelligenz kann dabei auch für die Personenidentifikation in einer Vorfeldzone und/oder einer Vorfeldaußenzone ausgebildet sein.

In weiter bevorzugter Weise kann die Leseeinrichtung und/oder die Steuer- und/oder Auswerteeinheit beziehungsweise das Modul für künstliche Intelligenz zur Erzeugung und/oder Speicherung von Personenbewegungsdaten, bevorzugt von Gestik- und/oder Motorik-Informationen, eingerichtet sein. Es kann sich hierbei insbesondere um Personenbewegungsdaten aus einer Vorfeldzone, eine Vorfeldaußenzone und/oder einer Kernerfassungszone handeln. Derartige Daten können zur fortlaufenden Optimierung der Personenidentifikation genutzt und/oder für den späteren Abruf gespeichert werden.

Eine Steuer- und/oder Auswerteeinheit kann ferner dazu eingerichtet sein, erzeugte und/oder gespeicherte Personenbewegungsdaten mit Daten zur Personenidentifikation und/oder Personenautorisierung abzugleichen. Beispielsweise kann ein Modul für künstliche Intelligenz dazu ausgebildet sein, aktuell erhobene Personenbewegungsdaten mit gespeicherten Personenbewegungsdaten abzugleichen und/oder fortlaufend eigenständig zu optimieren und/oder in Abhängigkeit einer Personenidentifikation geeignete Vorkonfigurationen des weiteren Lesevorgangs zu initiieren.

Weiterhin kann ein Modul für künstliche Intelligenz dazu ausgebildet sein, Personenbewegungsdaten in Abhängigkeit von weiteren Personenidentifikationsvorgängen, insbesondere anhand von Nutzereingaben, PIN Eingaben und/oder Schlüsselkarteneingaben und/oder Personenautorisierungen, zu speichern und/oder zuzuordnen.

Ferner kann die Steuer- und/oder Auswerteeinheit und/oder ein Modul für künstliche Intelligenz dazu eingerichtet sein, in Abhängigkeit eines Abgleichs von erzeugten und/oder gespeicherten Personenbewegungsdaten mit Daten zur weiteren Personenidentifikation und/oder Personenautorisierung eine Signalausgabe der Signalgebeeinrichtung einzustellen und/oder zu konfigurieren.

Gemäß einer weiter bevorzugten Ausgestaltung kann die Steuer- und/oder Auswerteeinheit und/oder ein Modul für künstliche Intelligenz dazu eingerichtet sein, nutzerbezogene und/oder personenbezogene Daten, insbesondere Bewegungsdaten, zu erheben und/oder zu speichern, insbesondere auf Grundlage der Geschwindigkeits- oder Schritttempoerkennung, Bewegungsmusterkennung und/oder Gestik- und/oder Motorik-Informationen, zumindest in einer Vorfeldzone, Vorfeldaußenzone und/oder Kernerfassungszone.

Der Lesebereich einer erfindungsgemäßen Erfassungsvorrichtung kann für das manuelle und/oder semimanuelle Hindurchbewegen von Waren zwecks Bulk-Erfassung durch die Leseeinrichtung ausgebildet sein.

Eine erfindungsgemäße Erfassungsvorrichtung kann insgesamt für die personenbediente Nutzung ausgebildet und/oder konfiguriert sein. Insbesondere kann die Ausbildung und/oder Konfiguration für die personenbediente Nutzung die Betätigung durch Personen zur Bedienung der Erfassungsvorrichtung erfordern, sodass vollständig selbsttätig ablaufende Prozesse und etwaige Fehlfunktionen vermieden werden können.

Ebenso ist es möglich, dass der Lesebereich einer Erfassungsvorrichtung kann für das automatisierte, insbesondere teilautomatisierte und/oder vollautomatisierte Hindurchbewegen von Waren zwecks Bulk-Erfassung durch die Leseeinrichtung ausgebildet ist. Der personenseitige Handhabungsaufwand lässt sich hierdurch verringern.

Eine erfindungsgemäße Erfassungsvorrichtung kann insgesamt auch für den vollautomatischen und/oder teilautomatischen Betrieb ausgebildet und/oder konfiguriert sein. Insbesondere kann die Ausbildung und/oder Konfiguration für den vollautomatischen und/oder teilautomatischen Betrieb die Betätigung von Personen zur Bedienung der Erfassungsvorrichtung entbehrlich machen.

Ein weiterer Aspekt der vorliegenden Erfindung betrifft eine Erfassungsvorrichtung, insbesondere für die Bulk-Erfassung von mit Transpondern versehenen Waren, mit wenigstens einer Leseeinrichtung zur berührungslosen Identifikation von Transpondern, mit einem Lesebereich, der zumindest abschnittsweise innerhalb der Reichweite der Leseeinrichtung verläuft und der für das manuelle Hindurchbewegen von Waren zur Bulk-Erfassung durch die Leseeinrichtung ausgebildet ist, und mit einer Signalgebereinrichtung zur Ausgabe wenigstens eines Freigabe- und/oder Sperrsignals betreffend die Warenbewegung und/oder -beschleunigung hin zum Lesebereich.

Ein solches Freigabe- und/oder Sperrsignal kann bevorzugt in Abhängigkeit der Erfassung von Waren, Transpondern, Objekten und/oder Containern in einer Vorfeldzone des Lesebereichs ausgeben werden. Insbesondere kann eine Vorfeldzone vor einer Passage auf einen Belegungszustand gescannt werden und in Abhängigkeit der Erfassung von unerwünschten Waren, Transpondern, Objekten oder Containern in einer Vorfeldzone kann ein Freigabe- oder Sperrsignal ausgegeben werden.

Ein noch weiterer Aspekt der vorliegenden Erfindung betrifft eine Erfassungsvorrichtung, insbesondere für die Bulk-Erfassung von mit Transpondern versehenen Waren, mit wenigstens einer Leseeinrichtung zur berührungslosen Identifikation von Transpondern, mit einem Lesebereich, der zumindest abschnittsweise innerhalb der Reichweite der Leseeinrichtung verläuft und der für das automatisierte, insbesondere für das teilautomatisierte und/oder das vollautomatisierte, Hindurchbewegen von Waren zur Bulk-Erfassung durch die Leseeinrichtung ausgebildet ist, und mit einer Signalgebereinrichtung zur Ausgabe wenigstens eines Beibehaltungs- und/oder Veränderungssignals betreffend die Warengeschwindigkeit und/oder -beschleunigung innerhalb des Lesebereichs.

Ein noch weiterer Aspekt der vorliegenden Erfindung betrifft eine Erfassungsvorrichtung, insbesondere für die Bulk-Erfassung von mit Transpondern versehenen Waren, mit wenigstens einer Leseeinrichtung zur berührungslosen Identifikation von Transpondern, mit einem Lesebereich, der zumindest abschnittsweise innerhalb der Reichweite der Leseeinrichtung verläuft und der für das automatisierte, insbesondere für das teilautomatisierte und/oder das vollautomatisierte, Hindurchbewegen von Waren zur Bulk-Erfassung durch die Leseeinrichtung ausgebildet ist, und mit einer Signalgebereinrichtung zur Ausgabe wenigstens eines Freigabe- und/oder Sperrsignals betreffend die Warenbewegung und/oder -beschleunigung hin zum Lesebereich.

Die voranstehend beschriebenen Einzelheiten und Vorteile, insbesondere vorteilhaften Ausgestaltungen der Erfassungsvorrichtung, gelten in gleicher Weise auch für Erfassungsvorrichtungen gemäß den voranstehend beschriebenen weiteren Aspekten der Erfindung.

Ein weiterer Aspekt der vorliegenden Erfindung betrifft ein Verfahren zur Bulk-Erfassung von mit Transpondern versehenen Waren, bei dem eine Vielzahl von mit Transpondern versehenen Waren manuell in einem Lesebereich einer Erfassungsvorrichtung positioniert und Hindurchbewegt wird, bei dem wenigstens eine Leseeinrichtung die Transponder der Waren berührungslos identifiziert und bei dem eine Signalgebereinrichtung wenigstens ein Beibehaltungs- und/oder Veränderungssignal betreffend die Warengeschwindigkeit und/oder -beschleunigung innerhalb des Lesebereichs ausgibt.

Durch ein erfindungsgemäßes Verfahren kann, wie auch in Bezug auf die voranstehend beschriebene Erfassungsvorrichtung beschrieben worden ist, vermieden werden, dass die jeweils zu erfassenden Waren zu früh aus dem Lesebereich entfernt werden und so eine nur unzureichende beziehungsweise unvollständige Erfassung erfolgt. Durch die Ausgabe wenigstens eines Beibehaltungs- und/oder Veränderungssignals betreffend die Warengeschwindigkeit und/oder Warenbeschleunigung kann insbesondere mit erhöhter Sicherheit gewährleistet werden, dass eine vollständige Erfassung sämtlicher Waren beziehungsweise der an den Waren angeordneten Transpondern vorgenommen wird und die jeweiligen Waren erst im Anschluss aus dem Lesebereich entfernt werden. Gleichzeitig können durch die Signalgebereinrichtung unerwünschte Beeinträchtigungen von Handhabungsprozessen und/oder Störungen der Erfassung entlang des Lesebereichs vermieden oder auf ein geringes Maß reduziert werden.

Ein noch weiterer Aspekt der vorliegenden Erfindung betrifft ein Verfahren zur Bulk-Erfassung von mit Transpondern versehenen Waren, bei dem eine Vielzahl von mit Transpondern versehenen Waren manuell in einem Lesebereich einer Erfassungsvorrichtung positioniert und Hindurchbewegt wird, bei dem wenigstens eine Leseeinrichtung die Transponder der Waren berührungslos identifiziert und bei dem eine Signalgebereinrichtung wenigstens ein Freigabe- und/oder Sperrsignal betreffend die Warenbewegung und/oder -beschleunigung hin zum Lesebereich ausgibt.

Ein noch weiterer Aspekt der vorliegenden Erfindung betrifft ein Verfahren zur Bulk-Erfassung von mit Transpondern versehenen Waren, bei dem eine Vielzahl von mit Transpondern versehenen Waren automatisiert, insbesondere teilautomatisiert und/oder vollautomatisiert, in einem Lesebereich einer Erfassungsvorrichtung positioniert und/oder Hindurchbewegt wird, bei dem wenigstens eine Leseeinrichtung die Transponder der Waren berührungslos identifiziert und bei dem eine Signalgebereinrichtung wenigstens ein Beibehaltungs- und/oder Veränderungssignal betreffend die Warengeschwindigkeit und/oder -beschleunigung innerhalb des Lesebereichs ausgibt.

Ein noch weiterer Aspekt der vorliegenden Erfindung betrifft ein Verfahren zur Bulk-Erfassung von mit Transpondern versehenen Waren, bei dem eine Vielzahl von mit Transpondern versehenen Waren automatisiert, insbesondere teilautomatisiert und/oder vollautomatisiert, in einem Lesebereich einer Erfassungsvorrichtung positioniert und/oder Hindurchbewegt wird, bei dem wenigstens eine Leseeinrichtung die Transponder der Waren berührungslos identifiziert und bei dem eine Signalgebereinrichtung wenigstens ein Freigabe- und/oder Sperrsignal betreffend die Warenbewegung und/oder -beschleunigung hin zum Lesebereich ausgibt.

Ein solches Freigabe- und/oder Sperrsignal kann bei einem erfindungsgemäßen Verfahren bevorzugt in Abhängigkeit der Erfassung von Waren, Transpondern, Objekten und/oder Containern in einer Vorfeldzone des Lesebereichs ausgeben werden. Insbesondere kann eine Vorfeldzone vor einer Passage auf einen Belegungszustand gescannt werden und in Abhängigkeit der Erfassung von unerwünschten Waren, Transpondern, Objekten oder Containern in einer Vorfeldzone kann ein Freigabe- oder Sperrsignal ausgegeben werden.

Gemäß einem weiteren Aspekt betrifft die vorliegende Erfindung allgemein auch eine Einrichtung und ein Verfahren zur Bulk-Erfassung von mit Transpondern versehenen Waren in Rollcontainern beim Queren einer Erfassungseinrichtung durch indirekte und direkte Beeinflussung elektromagnetischen Felder und der Lesevorgangsdauer der jeweiligen Leseeinrichtung in verschiedenen Zonen der Erfassungseinrichtung.

Eine indirekte Beeinflussung kann durch Erfassung von Ist-Zuständen in den Zonen der Einrichtung und der Erzeugung und Signalisierung von Beibehaltung- und Veränderungssignalen für zu steuernde Geschwindigkeiten und Beschleunigungen der Containerbewegung sowie deren zeitlichen Änderungen erfolgen. Eine direkte Beeinflussung kann durch Realisierung der Signalisierung durch gesteuerte Geschwindigkeiten und veränderbare Beschleunigungen der Containerbewegung in den Zonen der Einrichtung erfolgen. Eine Finalisierung des Erfassungsergebnisses kann durch einen mehrstufigen und/oder intelligenten Erfassungs- und Korrekturalgorithmus erfolgen. Eine erfindungsgemäße Einrichtung kann in vorteilhafter Weise verschiedene Erfassungszonen aufweisen.

Die voranstehend in Bezug auf die Erfassungsvorrichtung beschriebenen Einzelheiten und Vorteile gelten in gleicher Weise auch für ein erfindungsgemäßes Verfahren zur Bulk-Erfassung von mit Transpondern versehenen Waren.

Weitere Ausgestaltungen der vorliegenden Erfindung ergeben sich aus Kombinationen der in den Ansprüchen, der Beschreibung sowie den Figuren offenbarten Merkmale. Die vorliegende Erfindung wird nachfolgend anhand von Ausführungsbeispielen und zugehörigen Zeichnungen erläutert.

Es zeigen:
Fig. 1 eine Erfassungsvorrichtung gemäß einem Ausführungsbeispiel der vorliegenden Erfindung in schematischer Perspektivansicht.
Fig. 2 eine Erfassungsvorrichtung gemäß einem Ausführungsbeispiel der vorliegenden Erfindung in Draufsicht.
Fig. 3a-3c ein Ablaufdiagramm für einen allgemeinen Lesevorgang einer Passage mit einer Erfassungsvorrichtung gemäß einem Ausführungsbeispiel der vorliegenden Erfindung.

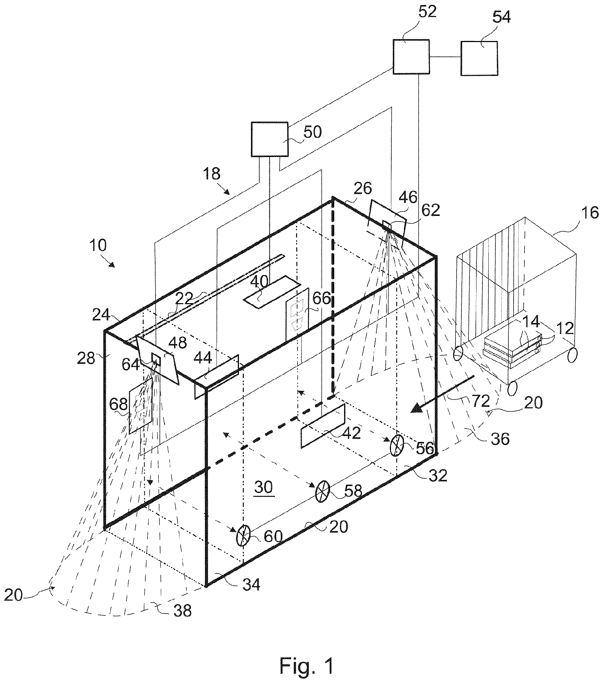

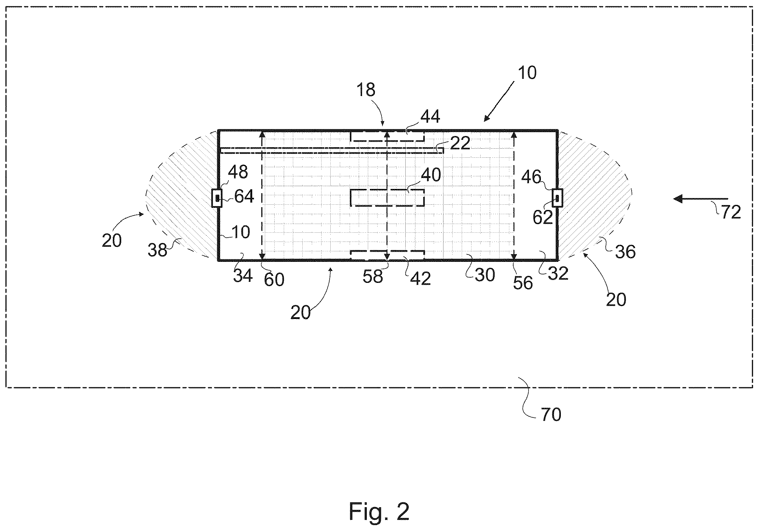

Figur 1 zeigt eine Perspektivansicht einer Erfassungsvorrichtung 10 gemäß einem Ausführungsbeispiel der vorliegenden Erfindung und in Figur 2 zeigt eine Draufsicht auf eine Erfassungsvorrichtung 10 gemäß einem Ausführungsbeispiel der vorliegenden Erfindung.

Die Erfassungsvorrichtung 10 ist insbesondere für die Bulk-Erfassung von mit Transpondern 12 versehenen Waren 14 ausgebildet. Bei den in der Figur 1 beispielhaft dargestellten Waren 14 kann es sich insbesondere um gestapelte Waren 14 handeln, wie zum Beispiel Textilien. Derartige Waren 14 können in Logistikabläufen insbesondere in Rollcontainern 16 transportiert werden. Es kann sich bei einem solchen Rollcontainer 16 insbesondere um einen Gittercontainer handeln. Der Rollcontainer 16 kann ebenfalls mit einem hier nicht näher dargestellten Transponder versehen sein, der während des Lesevorgangs durch die Leseeinrichtung 18 erfasst wird und die Zulässigkeit und/oder Unzulässigkeit des Rollcontainers für eine Passage beziehungsweise Lesevorgang detektiert.

Die erfindungsgemäße Erfassungsvorrichtung 10 ist in vorteilhafter Weise dafür ausgebildet, Waren 14 mit Transponder 12 innerhalb eines als Gittercontainer ausgeführten Rollcontainers 16 zu erfassen, obwohl es durch die Metallstrukturen des Rollcontainers 16 zu Strahlungsreflexionen kommen kann.

Die Erfassungsvorrichtung 10 gemäß Figuren 1 und 2 weist wenigstens eine Leseeinrichtung 18 zur berührungslosen Identifikation von Transpondern 12 sowie einen Lesebereich 20 auf, der zumindest abschnittsweise innerhalb der Reichweite der Leseeinrichtung 18 verläuft und der für das manuelle Hindurchbewegen von Waren 14 zur Bulk-Erfassung durch die Leseeinrichtung 18 ausgebildet ist.

Ferner ist die Erfassungsvorrichtung 10 gemäß der vorliegenden Ausführungsform mit einer Signalgebereinrichtung 22 zur Ausgabe wenigstens eines Beibehaltungs- und/oder Veränderungssignals betreffend die Warengeschwindigkeit und/oder -beschleunigung innerhalb des Lesebereichs 20 ausgestattet.

Durch die Signalgeberreinrichtung 22 kann vermieden oder zumindest die Gefahr verringert werden, dass die jeweils zu erfassenden Waren 14 zu früh aus dem Lesebereich 20 entfernt werden und so eine nur unzureichende beziehungsweise unvollständige Erfassung erfolgt. Gleichzeitig lassen sich durch die Signalgebereinrichtung 22 unerwünschte Beeinträchtigungen von Handhabungsprozessen entlang des Lesebereichs 20 vermieden oder auf ein geringes Maß reduziert werden. Durch die erfindungsgemäße Signalgeberreinrichtung 22 kann eine wirkungsvolle beziehungsweise intuitive Unterstützung für Bedienpersonal sicherstellen, sodass auch ohne den Einsatz von physischen Barrieren eine gezielte Beeinflussung der Lesevorgangsdauer beziehungsweise der Verweildauer von Waren 14 im Lesebereich 20 erreicht werden kann.

Die Signalgebereinrichtung 22 kann dazu ausgebildet sein, als Beibehaltungs- und/oder Veränderungssignal ein optisches und/oder akustisches Signal an eine hier nicht näher gezeigte Bedienperson auszugeben.

Insbesondere kann die Signalgebereinrichtung 22 als Lichtlaufleiste ausgebildet sein, bevorzugt zur Anzeige einer Soll-Durchfahrtsgeschwindigkeit und/oder Soll-Durchgangsgeschwindigkeit durch den Lesebereich 20. Zusätzlich oder alternativ ist es möglich, dass die Signalgebereinrichtung 22 zur Darstellung von Signalen unterschiedlicher Farbe, Wiederholgeschwindigkeiten, Leuchtintensitäten, Darstellungslängen und/oder zur Darstellung einer Anzahl von Signalen entlang der Warenbewegungsrichtung ausgebildet ist. Ebenso kann die Signalgebereinrichtung 22 zur Darstellung einer Countdown Anzeige ausgebildet sein.

Ein Beibehaltungs- und/oder Veränderungssignal der Signalgebereinrichtung 22 kann eine qualitative Ausprägung aufweisen beziehungsweise an eine Bedienperson gerichtet sein. Durch ein solches Signal der Signalgebereinrichtung 22 kann eine indirekte und/oder adaptive Steuerung und/oder Beeinflussung der Warengeschwindigkeit beziehungsweise Warenbeschleunigung und/oder -verweilzeit innerhalb des Lesebereichs erfolgen.

Der Lesebereich 20 kann wenigstens abschnittsweise durch eine Tunnelstruktur 24 begrenzt sein. Dabei weist eine solche Tunnelstruktur 24 bevorzugt einen offenen Eingang 26 und/oder einen offenen Ausgang 28 auf. Die Tunnelstruktur 24 kann den Lesebereich 20 zumindest abschnittsweise seitlich und/oder dachseitig begrenzen, insbesondere seitlich und/oder dachseitig gegenüber elektromagnetischen Signalen abschirmen. Die Tunnelstruktur 24 kann einen geradlinig verlaufenden Durchgang definieren.

Der Lesebereich 20 beziehungsweise die Tunnelstruktur 24 sind bevorzugt für das Hindurchtreten durch eine hier nicht dargestellte Bedienperson ausgebildet beziehungsweise dimensioniert. Ferner kann der Lesebereich 20 und/oder die Tunnelstruktur 24 für das manuelle und/oder semimanuelle Hindurchschieben eines Rollbehälters 16 durch eine Bedienperson oder durch mehrere Bedienpersonen ausgebildet und/oder dimensioniert sein. Der Lesebereich 20 und/oder die Tunnelstruktur 24 kann insbesondere für das manuelle Hindurchschieben eines Rollbehälters 16 mit einer Aufnahmekapazität von bis zu 1000 Wäschestücken, bevorzugt von bis zu 600 Wäschestücken oder von bis zu 500 Wäschestücken, durch eine Bedienperson ausgebildet sein.

Der Lesebereich 20 beziehungsweise die Tunnelstruktur 24 kann eine lichte Breite von etwa 1m oder etwa 1,5 m und eine lichte Höhe von etwa 2 m aufweisen. Ferner kann die Tunnelstruktur 24 eine Länge von etwa 3 m aufweisen.

Die Signalgebereinrichtung 22 ist in bevorzugter Weise innerhalb der Tunnelstruktur 24 angeordnet, insbesondere dachseitig innerhalb der Tunnelstruktur 24 oder an einer Seitenwand der Tunnelstruktur 24.

Der Lesebereich 20 weist wenigstens eine Kernerfassungszone 30 für die Erfassung von Transpondern 12 durch die Leseeinrichtung 18 auf. Dabei ist die Kernerfassungszone 30 bevorzugt vollständig innerhalb der Tunnelstruktur 24 angeordnet beziehungsweise weist eine geringe Länge auf als die Tunnelstruktur 24. Die Kernerfassungszone 30 ist für die Haupterfassung von Transpondern 12 während eines Lesevorgangs vorgesehen. Dabei soll nicht ausgeschlossen sein, dass auch außerhalb der Kernerfassungszone 30 ebenfalls Transponder 12 gezielt erfasst werden können.

Ferner können innerhalb der Tunnelstruktur 24 zwei Reflexions- und/oder Absorptionszonen 32 und 34 vorgesehen sein, insbesondere zur gezielten Reflexion und/oder Absorption elektromagnetischer Strahlung und/oder von Feldern aus der Kernerfassungszone 30. Die Reflexions- und/oder Absorptionszonen 32 und 34 grenzen an die Kernerfassungszone 30 an und bilden dadurch eine Unterbrechung des Lesebereichs 20. Die Reflexions- und/oder Absorptionszonen 32 und 34 sind bevorzugt vollständig innerhalb der Tunnelstruktur 24 angeordnet. Innerhalb der Reflexions- und/oder Absorptionszonen 32 und 34 soll keine Transpondererfassung erfolgen, sodass diese frei von Leseeinrichtungen ausgebildet sein können.

Die Reflexions- und/oder Absorptionszonen 32 und 34 können variabel ausgebildet sein. Beispielsweise können diese eine variable Länge aufweisen und/oder durch klappbare und/oder ausziehbare Seitenwände der Tunnelstruktur 24 begrenzt sein. Ebenso ist es möglich, dass Reflexions- und/oder Absorptionszonen 32 und 34 frei von Dachabschnitten ausgebildet sind. Dementsprechend kann die Tunnelstruktur 24 im Bereich der Reflexions- und/oder Absorptionszonen 32 und 34 frei von einer dachseitigen Begrenzung ausgeführt sein. In einer vollständig eingeklappten und/oder eingefahrenen Stellung etwaiger Seitenwände können die Reflexions- und/oder Absorptionszonen 32 und 34 auch temporär entfallen, sodass die Tunnelstruktur 24 unmittelbar mit der Kernerfassungszone 30 beginnt und endet.

Der Lesebereich 20 weist ferner zwei Vorfeldzonen 36 und 38 auf. Die Vorfeldzonen 36 und 38 sind unabhängig von der Kernerfassungszone 30 und/oder unabhängig von den Reflexions- und/oder Absorptionszonen 32 und 34 ausgebildet. Dabei sind die Vorfeldzonen insbesondere außerhalb der Tunnelstruktur 24 angeordnet. Die Vorfeldzone 36 ist eine an den Eingang 26 der Tunnelstruktur 24 angrenzende Vorfeld-Eingangszone. Die Vorfeldzone 38 ist eine an den Ausgang 28 der Tunnelstruktur 24 angrenzende Vorfeld-Ausgangszone.

Dabei können die Vorfeldzonen 36 und 38 des Lesebereichs 20 für die Erfassung von Transpondern 12 ausgebildet sein, um die Gesamterfassungsgüte weiter zu verbessern. Bevorzugt können die Vorfeldzonen 36 und 38 als Sicherheitszonen ausgebildet sein, insbesondere für die Erfassung und/oder Korrektur von Falschlesungen vor, während und/oder nach eines Lesevorgangs in einer Kernerfassungszone 30.

Die Vorfeld-Eingangszone 36 des Lesebereichs 20 kann für die qualitative Vorerfassung einer Anzahl von Transpondern 12 ausgebildet sein, insbesondere bei Beginn einer Passage durch den Lesebereich 20. Ebenso kann die Vorfeld-Eingangszone 36 des Lesebereichs 20 für die Geschwindigkeits-, Beschleunigungs- und/oder Positionserfassung von Waren 14 ausgebildet sein, insbesondere zur Vorkonfiguration eines Lesevorgangs innerhalb einer Kernerfassungszone 30 und/oder zur Vorkonfiguration der Signalgebereinrichtung 22.

Zusätzlich oder alternativ kann die Vorfeld-Eingangszone 36 und/oder die Vorfeld-Ausgangszone 38 für die Erfassung von Fremdobjekten und/oder Fremdtranspondern und/oder unzulässigen Behältern und/oder Behälterarten und/oder einer unzulässigen Behälteranzahl ausgebildet sein.

Die Leseeinrichtung 18 kann eine Mehrzahl von Leseeinheiten 40, 42, 44, 46 und 48 aufweisen. Die Leseeinheiten 40, 42, 44, 46 und 48 können beispielsweise als Antennen ausgebildet sein, insbesondere zur Erfassung von RFID-Transpondern. Bei den Leseeinheiten 40, 42, 44, 46 und 48 kann es sich um aktive oder passive Antennen handeln.

Die Leseeinheiten 40, 42, 44, 46 und 48 sind zur Erfassung in den unterschiedlichen Zonen des Lesebereichs 20 angeordnet. Insbesondere können die Leseeinheiten 40, 42 und 44 in der Kernerfassungszone 30 des Lesebereichs 20 angeordnet sein. Dementsprechend sind die Leseeinheiten 40, 42 und 44 auch zu Erfassung von Transpondern 12 in der Kernerfassungszone 30 des Lesebereichs 20 eingerichtet. Ferner ist die Leseeinheit 46 in und/oder an der Vorfeld-Eingangszone 36 angeordnet und ist dementsprechend zu Erfassung von Transpondern 12 in der Vorfeld-Eingangszone 36 des Lesebereichs 20 eingerichtet. Schließlich ist die Leseeinheit 48 in und/oder an der Vorfeld-Ausgangszone 38 angeordnet und ist dementsprechend zu Erfassung von Transpondern 12 in der Vorfeld-Ausgangszone 38 des Lesebereichs 20 eingerichtet.

Bei den Leseeinheiten 46 und 48 der Vorfeldzonen 36 und 38 kann es sich um aktive oder passive Richtantennen für die Erfassung in der jeweiligen Vorfeldzone 36 und 38 des Lesebereichs 20 handeln. Durch die Ausbildung als Richtantenne kann ein definierter räumlicher Bereich abgedeckt werden und darin befindliche Transponder 12 können zuverlässig erfasst werden.

Die Leseeinrichtung 18 weist schließlich einen RFID-Lesevorrichtung 50 auf. Jede der Leseeinheiten 40, 42, 44, 46 und 48 steht mit der RFID-Lesevorrichtung 50 in einer Signal- beziehungsweise Datenverbindung. Die RFID-Lesevorrichtung 50 ist wiederum mit einer Steuer- und/oder Auswerteeinheit 52 verbunden. Die Steuer- und/oder Auswerteeinheit 52 kann zur Auswertung von Signalen und/oder Daten der RFID-Lesevorrichtung 50 ausgebildet sein. Mithin kann es sich bei der Steuer- und/oder Auswerteeinheit 52 auch um eine Auswerteeinheit handeln.

Die Steuer- und/oder Auswerteeinheit 52 kann ferner an eine übergeordnete IT-Struktur angebunden sein. Eine solche übergeordnete IT-Struktur kann Bestandteil der Erfassungsvorrichtung 10 sein oder gesondert von der Erfassungsvorrichtung 10 ausgebildet sein und mit dieser in Verbindung stehen. Bevorzugt umfasst eine solche IT-Struktur zumindest eine Datenbank 54, die mit der Steuer- und/oder Auswerteeinheit 52 in Verbindung steht. Beispielsweise können Transponder 12 über die Leseeinheiten 40, 42, 44, 46 und 48 erfasst und über die RFID-Lesevorrichtung 50 identifiziert werden. Über die RFID-Lesevorrichtung 50 kann eine Daten- beziehungsweise Signalübertragung an die Steuer- und/oder Auswerteeinheit 52 erfolgen und bei Abschluss eines Lesevorgangs eine Übermittlung an die Datenbank 54 erfolgen.

Wie den Figuren 1 und 2 weiter entnommen werden kann weist die Erfassungsvorrichtung 10 ferner die Sensorvorrichtungen 56, 58 und 60 auf. Die Sensorvorrichtungen 56, 58 und 60 können beispielsweise als Lichtschranken ausgebildet sein. Es kann sich bei den Sensorvorrichtungen 56, 58 und 60 demnach um Positionssensoren handeln. Über die Sensorvorrichtungen 56, 58 und 60 kann eine Erfassung von Waren- und/oder Behälterpositionen innerhalb des Lesebereichs 20 erfolgen, insbesondere innerhalb der Kernerfassungszone 30.

Durch die Sensorvorrichtung 56 kann detektiert werden, dass ein Rollcontainer 16 die Grenze zwischen der Reflexions- und/oder Absorptionszone 32 und der Kernerfassungszone 30 überschreitet. Ferner kann durch die Sensorvorrichtung 58 kann detektiert werden, dass ein Rollcontainer 16 die Mitte der Kernerfassungszone 30 erreicht hat. Schließlich kann durch die Sensorvorrichtung 60 detektiert werden, dass ein Rollcontainer 16 die Grenze zwischen der Kernerfassungszone 30 und der Reflexions- und/oder Absorptionszone 34 überschreitet und damit die Kernerfassungszone 30 in Richtung Ausgang 28 verlässt.

Die Sensorvorrichtungen 56, 58 und 60 können ebenfalls mit der Steuer- und/oder Auswerteeinheit 52 in Verbindung stehen. Je nach Positionserfassung durch die Sensorvorrichtungen 56, 58 und 60 kann über die Steuer- und/oder Auswerteeinheit 52 der jeweilige Lesevorgang beeinflusst beziehungsweise gesteuert werden.

Den Figuren 1 und 2 ist weiterhin zu entnehmen, dass die Erfassungsvorrichtung 10 mit Sensorvorrichtungen 62 und 64 ausgestattet ist. Es handelt sich bei den Sensorvorrichtungen 62 und 64 insbesondere um Positionssensoren zur Erfassung einer Waren- und/oder Behälterposition in den Vorfeldzonen 36 und 38 und/oder zur Geschwindigkeits- und/oder Beschleunigungserfassung innerhalb der Vorfeldzonen 36 und 38. Die Sensorvorrichtungen 62 und 64 können mit der RFID-Lesevorrichtung 50 und/oder mit der Steuer- und/oder Auswerteeinheit 52 in Verbindung stehen. Bei den Sensorvorrichtungen 62 und 64 kann es sich beispielsweise um Lasersensoren handeln.

Der Figur 1 kann weiterhin entnommen werden, dass die Erfassungsvorrichtung 10 Bedieneinrichtungen 66 und 68 für die Nutzerbedienung aufweist. Die Bedieneinrichtung 66 ist eingangsseitig der Tunnelstruktur 24 angeordnet und kann somit zur Nutzerbedienung vor und/oder während eines Lesevorgangs genutzt werden. Die Bedieneinrichtung 68 ist ausgangsseitig der Tunnelstruktur 24 angeordnet und kann somit zur Nutzerbedienung nach und/oder während eines Lesevorgangs genutzt werden.

Die Bedieneinrichtungen 66 und 68 können ebenfalls mit der Steuer- und/oder Auswerteeinheit 52 in Verbindung stehen. Über die Bedieneinrichtung 66 kann beispielsweise die Wahl eines Betriebsmodus der Erfassungsvorrichtung 10 beziehungsweise Leseeinrichtung 18 vorgenommen oder auch ein Lieferschein beziehungsweise Personendaten eingelesen werden. Über die Bedieneinrichtung 68 kann beispielsweise ein Erfassungsergebnisses oder eine Korrektur des Erfassungsergebnisses angezeigt werden. Ebenso kann über die Bedieneinrichtung 68 das Quittieren eines Erfassungsergebnisses oder weiterer Eingaben erfolgen.

Die Steuer- und/oder Auswerteeinheit 52 kann ferner mit einem Modul für künstliche Intelligenz ausgestattet sein. Über ein solches Modul für künstliche Intelligenz kann insbesondere eine optimierte Ansteuerung der Leseeinheiten 40, 42, 44, 46 und 48, der Signalgebereinrichtung 22, der Bedieneinrichtungen 66 und 68 sowie auch der Sensorvorrichtung 56, 68, 60, 62 und 64, gegebenenfalls mit Berücksichtigung von Daten vorrangegangener Erfassungen, erfolgen.

Im Betrieb der Erfassungsvorrichtung kann die Signalgebereinrichtung 22 wenigstens ein Beibehaltungs- und/oder Veränderungssignal in Abhängigkeit einer Geschwindigkeits-, Beschleunigungs- und/oder Positionserfassung von Waren 14 innerhalb des Lesebereichs 20 ausgeben. Zusätzlich oder alternativ kann die Signalgebereinrichtung 22 ein Beibehaltungs- und/oder Veränderungssignal in Abhängigkeit einer bereits erfassten und/oder geschätzten Anzahl von Transpondern 12 während eines Lesevorgangs innerhalb des Lesebereichs 20 ausgeben, insbesondere in Abhängigkeit einer erfassten und/oder geschätzten Anzahl von Transpondern 12 während eines Lesevorgangs in einer Vorfeldzone 36 und/oder der Kernerfassungszone 30 des Lesebereichs 20.

Ferner kann die Signalgebereinrichtung 22 wenigstens ein Beibehaltungs- und/oder Veränderungssignals in Abhängigkeit des Verlaufs der Erfassung von Transpondern 12 während eines Lesevorgangs innerhalb des Lesebereichs 20 ausgeben, insbesondere in Abhängigkeit eines Verlaufs der Erfassung von Transpondern 12 während eines Lesevorgangs in einer Vorfeldzone 36 und/oder einer Kernerfassungszone 30 des Lesebereichs 20.

Die Signalgebereinrichtung 22 kann ferner zur Ausgabe wenigstens eines Beibehaltungs- und/oder Veränderungssignals in Abhängigkeit einer vorab und/oder fortlaufend geschätzten und/oder qualitativ ermittelten Anzahl von Transpondern 12 ausgebildet sein. Eine Vorabschätzung kann beispielsweise durch Erfassung von Transpondern 12 in der Vorfeldzone 36 erfolgen.

Weiterhin kann die Signalgebereinrichtung 22 dazu eingerichtet sein, ein Beibehaltungs- und/oder Beschleunigungssignal auszugeben, wenn eine Warenbewegung durch den Lesebereich 20, insbesondere in der Vorfeldzone 36 und/oder der Kernerfassungszone 30 des Lesebereichs 20, eine vordefinierte Geschwindigkeitsschwelle unterschreitet oder gleich ist. Eine solche Geschwindigkeitsschwelle kann beispielsweise empirisch ermittelt, laufend angepasst oder je nach Betriebsmodus variiert werden. Ferner kann die Signalgebereinrichtung 22 dazu ausgebildet ist, ein Beibehaltungs- und/oder Beschleunigungssignal auszugeben, wenn ein Lesevorgang noch während des Hindurchbewegens von Waren 14 durch den Lesebereich 20 abgeschlossen ist oder abgeschlossen sein wird.

Ebenso kann die Signalgebereinrichtung 22 dazu ausgebildet sein, ein Verlangsamungs- und/oder Entschleunigungssignal auszugeben, wenn die Warenbewegung durch den Lesebereich 20, insbesondere in einer Vorfeldzone 36 und/oder einer Kernerfassungszone 30 des Lesebereichs 20, eine vordefinierte Geschwindigkeitsschwelle überschreitet. Schließlich kann die Signalgebereinrichtung 22 auch dazu ausgebildet sein, ein Verlangsamungs- und/oder Entschleunigungssignal auszugeben, wenn ein Lesevorgang bei oder nach Abschluss des Hindurchbewegens von Waren 14 durch den Lesebereich 20 unvollständig ist oder unvollständig sein wird.

Ein Lesevorgang kann durch die Leseeinrichtung 18 abgebrochen und/oder das Leseergebnis verworfen werden, wenn die zu erfassenden Waren 14 den Ausgang des Lesebereichs 20 und/oder den Ausgang 28 der Tunnelstruktur 24 vor vollständigem Abschluss des Lesevorgangs passiert.

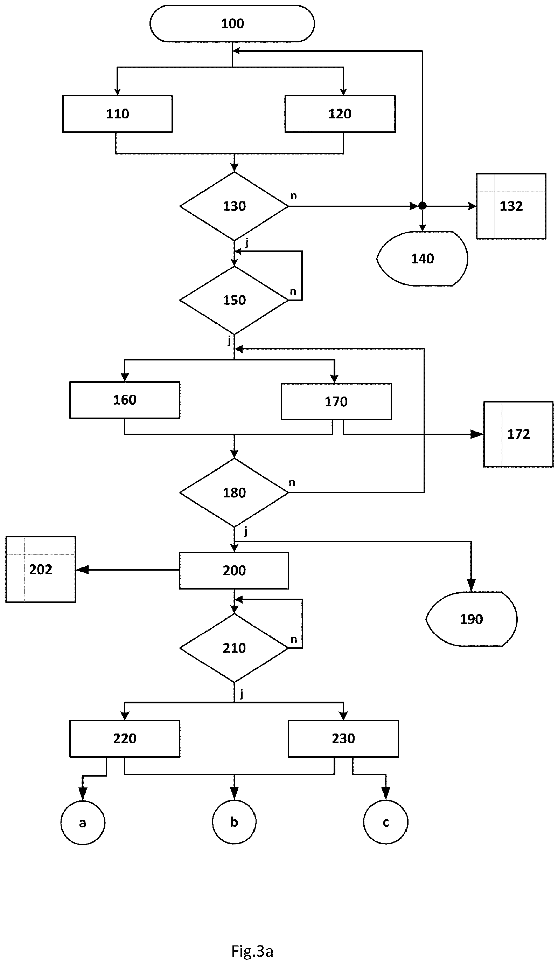

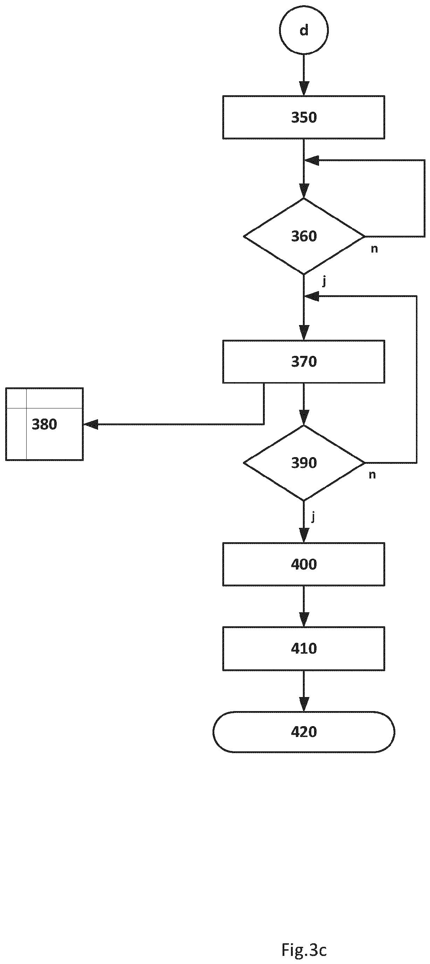

Die Funktionsweise der Erfassungsvorrichtung 10 wird nachfolgend unter Bezugnahme auf das Ablaufdiagramm in den Figuren 3a bis 3c näher beschrieben.

In Schritt 100 erfolgt der Start einer Passage zur Erfassung von mit Transpondern 12 versehenen Waren 14. Die Waren 14 sind in einem Rollcontainer 16 angeordnet. Der Rollcontainer 16 mit den Waren 14 befindet sich noch in einer Außenzone 70, die nicht zur Erfassungsvorrichtung 10 zu zählen ist. Der Rollcontainer 16 wird in Schritt 100 ausgehend von der Außenzone 70 in Richtung des Richtungspfeils 72 bewegt.

Bevor der Rollcontainer die Eingangs-Vorfeldzone 36 erreicht erfolgt in Schritt 110 ein Scan der Eingangs-Vorfeldzone 36 auf fremde Waren, die nicht zur Passage gehören, um hierdurch offensichtliche positive Falschlesungen zu erkennen.

Ebenso kann in Schritt 110 die Ausgangs-Vorfeldzone 38 auf fremde Waren gescannt werden. Die Scans in Schritt 110 können durch die Leseeinheiten 46 und 48 der Vorfeldzonen 36 und 38 vorgenommen werden. Bei den Leseeinheiten 46 und 48 kann es sich um aktive Antennen handeln. In Schritt 110 werden die Vorfeldzonen 36 und 38 mithin auf Nichtbelegung und/oder Belegung mit Warentranspondern gescannt.

Parallel zu Schritt 110 erfolgt in Schritt 120 ein Scan der Vorfeldzonen 36 und 38 auf fremde Container oder andere Objekte, die nicht zu der jeweiligen Passage oder zum jeweiligen Lesevorgang gehören oder gehören sollen. Der Scan in Schritt 120 kann mit den Sensorvorrichtung 62 und 64 erfolgen, bei denen es sich um optische Sensoren oder Lasersensoren handeln kann.

In Schritt 130 wird festgestellt, ob die Vorfeldzonen 36 und 38 frei von Waren und/oder Objekten sind. Falls die Vorfeldzonen 36 und 38 mit unerwünschten Waren und/oder Objekten belegt sind, schreitet der Ablauf voran zu Schritt 132 und Schritt 140. Sind die Vorfeldzonen 36 und 38 frei von Waren und/oder Objekten kann durch die Signalgebereinrichtung 22 ein Freigabesignal ausgebeben werden, beispielsweise "permanent grün". Bei der Anzeige "permanent grün" kann es sich um ein Freigabesignal handeln, insbesondere betreffend die Warenbewegung und/oder -beschleunigung hin zum Lesebereich 20. Parallel oder anschließend schreitet der Ablauf voran zu Schritt 150.

In Schritt 132 werden erfasste Positiv-Falschlesungen von Waren und/oder Objekten gespeichert, insbesondere in einem internen Speicher, der Teil einer Steuer- und/oder Auswerteeinheit 52 sein kann.

In Schritt 140 wird durch die Signalgebeeinrichtung 22 ein Signal ausgegeben, das die Belegung einer der oder beider Vorfeldzonen 36, 38 anzeigt. Beispielsweise kann Signalgebeeinrichtung 22 als Anzeige "permanent rot" anzeigen. Bei der Anzeige "permanent rot" kann es sich um ein Sperrsignal handeln, insbesondere betreffend die Warenbewegung und/oder -beschleunigung hin zum Lesebereich 20.

In der Folge müssen oder sollen die Vorfeldzonen 36 und/oder 38 durch eine Bedienkraft geräumt werden. Nach einer Räumung der Vorfeldzonen 36 und/oder 38 kann der Ablauf zurückkehren zu den Schritten 110 und 120.

In Schritt 150 wird festgestellt, ob der Rollcontainer 16 die Vorfeldzone 36 erreicht hat. Der Schritt 150 wird wiederholt, sofern der Rollcontainer 16 die Vorfeldzone 36 nicht erreicht hat, andernfalls schreitet der Ablauf voran zu den Schritten 160 und 170.

In Schritt 160 erfasst die Leseeinrichtung 18 über die als aktive Antennen ausgebildete Leseeinheit 46 als "Voraberfassung" die Warentransponder 12 der Waren 14 im Rollcontainer 16.

Parallel zu Schritt 160 erfolgt in Schritt 170 durch die als optischer Sensor beziehungsweise Lasersensor ausgebildete Sensorvorrichtung 62 getaktet die Ist-Geschwindigkeit des Rollcontainers 16 der jeweiligen Passage. In Schritt 172 werden die Bewegungs- und/oder Geschwindigkeitsdaten, insbesondere auch der Geschwindigkeitsverlauf, des Rollcontainers 16 in einem internen Speicher einer Steuer- und/oder Auswerteeinheit 52 gespeichert.

In Schritt 180 wird festgestellt, ob der Rollcontainer 16 die Reflexions- und/oder Absorptionszone 32 erreicht hat. Sofern die Reflexions- und/oder Absorptionszone 32 nicht erreicht worden ist, kehr der Ablauf zurück zu den Schritten 160 und 170, andernfalls schreitet der Ablauf voran zu Schritt 190 und 200.

In Schritt 190 erfolgt die Anzeige einer Soll-Geschwindigkeit. Hierzu sendet die Steuer- und/oder Auswerteeinheit 52 die für die den Lesevorgang in der Kernerfassungszone 30 berechnete Soll-Geschwindigkeit des Rollcontainers 16 an die Signalgebereinrichtung 22. Die Signalgebereinrichtung gibt beispielsweise ein Signal "laufend grün" als Information an die jeweilige Bedienperson aus. Bei der Anzeige "laufend grün" kann es sich um Beibehaltungs- und/oder Beschleunigungssignal handeln, insbesondere um ein Beibehaltungs- und/oder Beschleunigungssignal betreffend die Warengeschwindigkeit und/oder -beschleunigung innerhalb des Lesebereichs 20.

In Schritt 200 wird die Vorab-Erfassung der Transponder 12 in der Vorfeldzone 36 beendet. Anschließend wird in Schritt 202 das Vorab-Erfassungsergebnis aus der Vorfeldzone 36 in einem internen Speicher der Steuer- und/oder Auswerteeinheit 52 gespeichert.

In Schritt 210 wird durch die Sensorvorrichtung 56 festgestellt, ob die Kernerfassungszone 30 erreicht worden ist. Ist die Sensorvorrichtung 56 beispielsweise als Lichtschranke ausgebildet, kann eine Unterbrechung der Lichtschranke durch den Rollcontainer 16 detektiert werden. Ist die Kernerfassungszone 30 noch nicht erreicht worden, wird der Schritt 210 wiederholt. Ist die Kernerfassungszone 30 erreicht worden, schreitet der Ablauf voran zu den Schritten 220 und 230.

In Schritt 220 beginnt die Erfassung der mit Transponder 12 versehenen Waren 14 im Rollcontainer 156 in der Kernerfassungszone 30. Die Erfassung von Transpondern 12 in der Kernerfassungszone 30 kann durch die als aktive Antennen ausgebildeten Leseeinheiten 40, 42 und 44 der Leseeinrichtung 18 vorgenommen werden.

Parallel zu Schritt 220 kann in Schritt 230 durch die als Antennen ausgebildeten Leseeinheiten 46 und 48 eine Erfassung von etwaigen sonstigen Transpondern in den Vorfeldzonen 36 und 38 vorgenommen werden, insbesondere zwecks Erfassung von sogenannten Positiv-Falschlesungen der sonstigen Transponder. Mit anderen Worten kann während der Erfassung von Transpondern 12 im Schritt 220 parallel in Schritt 230 auch eine Überwachung der Vorfeldzonen 36 und 38 erfolgen, um etwaige Positiv-Falschlesungen erfassen zu können.

Alternativ zur korrigierenden Erfassung von etwaigen sonstigen Transpondern in den Vorfeldzonen 36 und 38 können die Leseeinheiten 46 und 48 der Vorfeldzonen 36 und 38 durch gezielte Interferenz auch zur beabsichtigten Deaktivierung nicht erwünschter Transponder verwendet werden. Positiv-Falschlesungen können damit gezielt temporär "deaktiviert" oder weitgehend vermieden werden.

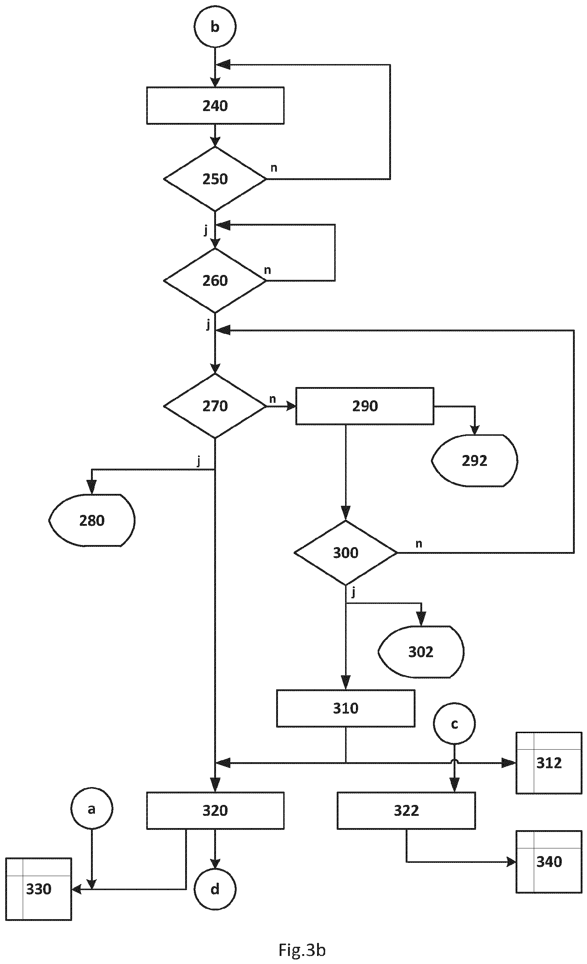

Im Anschluss an die Schritte 220 und 230 schreitet der Ablauf voran zu den Schritten 240, 322 und 330, wie dem Übergang der Figuren 3a und 3b entnommen werden kann.

In Schritt 240 kann eine Bedienung der Bedieneinrichtung 66 vorgenommen werden. Die Bedieneinrichtung 66 kann beispielsweise als Eingabe-Terminal ausgebildet sein und der jeweiligen Bedienperson die Wahl einer Betriebsart ermöglichen.

In Schritt 250 wird festgestellt, ob die Eingabe an der Bedieneinrichtung beendet worden ist. Ist die Eingabe noch nicht beendet, wird der Schritt 250 wiederholt, andernfalls schreitet der Ablauf voran zu Schritt 260.

In Schritt 260 wird festgestellt, ob die Mitte der Kernerfassungszone erreicht worden ist. Dies kann mittels der Sensorvorrichtung 58 erfolgen, die ebenfalls als Lichtschranke ausgeführt sein kann. Durch Unterbrechung der als Lichtschranke ausgeführten Sensorvorrichtung 58 kann erkannt werden, dass der Rollcontainer 16 die Mitte der Kernerfassungszone erreicht hat.

In Schritt 270 wird festgestellt, ob alle erwarteten Lesedaten aus der Erfassung von Transpondern 12 in der Kernerfassungszone 30 vorliegen. Sofern die Lesedaten aus der Erfassung von Transpondern 12 in der Kernerfassungszone 30 vollständig vorliegen schreitet der Ablauf voran zu den Schritten 280 und 320, andernfalls schreitet der Ablauf voran zu den Schritten 290 und 272.

In Schritt 280 sendet die Steuer- und/oder Auswerteeinheit 52 an die Signalgebereinrichtung 22 einen Befehl zur Ausgabe eines Signals zur Anzeige "permanent grün". Bei der Anzeige "permanent grün" kann es sich um Beibehaltungssignal handeln, insbesondere um ein Beibehaltungs- und/oder Beschleunigungssignal betreffend die Warengeschwindigkeit und/oder -beschleunigung innerhalb des Lesebereichs 20.

In Schritt 290 sendet die Steuer- und/oder Auswerteeinheit 52 an die Signalgebereinrichtung 22 einen Befehl zur Ausgabe eines Signals 292 zur Anzeige "blinkend gelb", da die Leseeinrichtung 18 die Erfassung von Transpondern in der Kernerfassungszone 30 noch nicht abgeschlossen hat. Bei der Anzeige "blinkend gelb" kann es sich um Veränderungssignal betreffend die Warengeschwindigkeit und/oder -beschleunigung innerhalb des Lesebereichs 20 handeln, insbesondere um ein Verlangsamungs- und/oder Entschleunigungssignal beziehungsweise Stoppsignal.

In Schritt 300 wird festgestellt, ob der Rollcontainer 16 die Kernerfassungszone 30 verlässt und in die Reflexions- und/oder Absorptionszone 34 eintritt. Dies kann mittels der Sensorvorrichtung 60 erfolgen, die ebenfalls als Lichtschranke ausgeführt sein kann. Durch Unterbrechung der als Lichtschranke ausgeführten Sensorvorrichtung 60 kann erkannt werden, dass der Rollcontainer 16 das Ende der Kernerfassungszone erreicht hat und in die Reflexions- und/oder Absorptionszone 34 geschoben wird. Hat der Rollcontainer die Kernerfassungszone 30 noch nicht verlassen, kehrt der Ablauf zurück zu Schritt 270, andernfalls schreitet der Ablauf voran zu Schritt 302 und 310.

In Schritt 302 sendet die Steuer- und/oder Auswerteeinheit 52 an die Signalgebereinrichtung 22 einen Befehl zur Ausgabe eines Signals zur Anzeige "blinkend rot". Bei der Anzeige "blinkend rot" kann es sich um Veränderungssignal betreffend die Warengeschwindigkeit und/oder -beschleunigung innerhalb des Lesebereichs 20 handeln, insbesondere um ein Stoppsignal und/oder ein Warnsignal an eine Bedienperson.

In Schritt 310 wird das Erfassungsergebnis der Leseeinrichtung 18 als unvollständig markiert und im Schritt 312 in einem internen Speicher unter "markierte Ergebnisse" gespeichert. Bei dem internen Speicher kann es sich wiederum um einen Speicher der Steuer- und/oder Auswerteeinheit 52 handeln.

In Schritt 320 wird der Lesevorgang in der Kernerfassungszone 30 durch die Leseeinheiten 40, 42 und 44 der Leseeinrichtung 18 beendet.

Im folgenden Schritt 330 werden Daten aus dem Lesevorgang in der Kernerfassungszone 30 in einem internen Speicher der Steuer- und/oder Auswerteeinheit 52 gespeichert.

In Schritt 322 wird der parallel zum Lesevorgang in der Kernerfassungszone 30 erfolgende Lesevorgang in den Vorfeldzonen 36 und 38 durch die Leseeinheiten 46 und 48 der Leseeinrichtung 18 beendet.

Im folgenden Schritt 340 werden Daten aus dem parallel zur Transpondererfassung in der Kernerfassungszone 30 erfolgenden Lesevorgang in den Vorfeldzonen 36 und 38, insbesondere die sogenannten "Positiv-Falschlesungen", in einem internen Speicher der Steuer- und/oder Auswerteeinheit 52 gespeichert.

In Schritt 350 erfolgt eine Anzeige und/oder ein Quittieren von Erfassungsergebnissen an der ausgangsseitigen Bedieneinrichtung 68. Insbesondere kann es sich bei den angezeigten und/oder zu quittierenden Ergebnissen um Roh-Erfassungsergebnisse handeln, die in Schritt 330 gespeichert worden sind.

In Schritt 360 wird festgestellt, ob der Rollcontainer 16 die Reflexions- und/oder Absorptionszone 34 verlassen hat und in die Ausgangs-Vorfeldzone 38 gelangt ist. Ist der Rollcontainer 16 weiterhin in der Reflexions- und/oder Absorptionszone 34 wird der Schritt 360 wiederholt, andernfalls schreitet der Ablauf voran zu Schritt 370.

In Schritt 370 erfolgt über die als aktive Antenne ausgebildete Leseeinheit 48 der Leseeinrichtung 18 eine weitere Transpondererfassung innerhalb der Ausgangs-Vorfeldzone 38. Es kann sich hierbei um eine "Nacherfassung" der mit Transponder 12 versehenen Waren 14 Rollcontainer 16 handeln.

In Schritt 380 werden die Erfassungs-Daten der Nacherfassung aus Schritt 370 in einem internen Speicher der Steuer- und/oder Auswerteeinheit 52 gespeichert.

In Schritt 390 wird festgestellt, ob der Rollcontainer 16 die Ausgangs-Vorfeldzone 38 verlassen hat. Ist der Rollcontainer 16 weiterhin vollständig in der Ausgangs-Vorfeldzone 38, wird der Schritt 390 wiederholt, andernfalls schreitet der Ablauf voran zu Schritt 400.

In Schritt 400 erfolgt die Berechnung des finalen Erfassungsergebnisses aus den Erfassungsergebnissen der internen Speicher oder Speichervorgänge 302, 312, 330, 340, 380, insbesondere in einem mehrstufigen intelligenten Korrekturalgorithmus in der Steuer- und/oder Auswerteeinheit 52.

In Schritt 410 erfolgt eine Übertragung des finalen Erfassungsergebnisses aus Schritt 400 an eine übergeordnete IT-Struktur, insbesondere in eine Datenbank 54.

In Schritt 420 wird der Lesevorgang beziehungsweise der Erfassungsprozess der Passage beendet.

Eine erfindungsgemäße Erfassungsvorrichtung 10 eignet sich insbesondere für den Einsatz zur Warenausgangserfassung, beispielsweise in einer Wäscherei oder einem Textildienstleister, der Einrichtungen des Gesundheitswesens beziehungsweise Krankenhäuser mit Textilien beliefert. Ebenso eignet sich eine erfindungsgemäße Erfassungsvorrichtung 10 für den Einsatz zur Wareneingangserfassung, beispielsweise zur Erfassung von Schmutzwäsche, die in Rollcontainern angeliefert wird. Schmutzwäsche kann beispielsweise aus Einrichtungen des Gesundheitswesens, wie Krankenhäusern, stammen und an eine Wäscherei zurückgeliefert werden. Ebenso kann eine Erfassungsvorrichtung 10 für die In-House-Logistik eingesetzt werden, beispielsweise zur Artikelerfassung in Rollcontainern für die Bestandsverwaltung.

Weitere Aspekte der vorliegenden Erfindung werden nachfolgend erörtert.

Ein weiterer, erster unabhängiger Aspekt der vorliegenden Erfindung betrifft eine Erfassungsvorrichtung (10), insbesondere für die Bulk-Erfassung von mit Transpondern (12) versehenen Waren (14), mit wenigstens einer Leseeinrichtung (18) zur berührungslosen Identifikation von Transpondern (12), mit einem Lesebereich (20), der zumindest abschnittsweise innerhalb der Reichweite der Leseeinrichtung (18) verläuft und der für das manuelle Hindurchbewegen von Waren (14) zur Bulk-Erfassung durch die Leseeinrichtung (18) ausgebildet ist, und mit einer Signalgebereinrichtung (22) zur Ausgabe wenigstens eines Beibehaltungs- und/oder Veränderungssignals betreffend die Warengeschwindigkeit und/oder -beschleunigung innerhalb des Lesebereichs (20).

Ein zweiter Aspekt betrifft eine Erfassungsvorrichtung (10) nach den vorstehenden Aspekt, die Signalgebereinrichtung (22) zur Ausgabe wenigstens eines Beibehaltungs- und/oder Veränderungssignals in Abhängigkeit einer Geschwindigkeits-, Beschleunigungs- und/oder Positionserfassung von Waren (14) innerhalb des Lesebereichs (20) ausgebildet ist.

Ein dritter Aspekt betrifft eine Erfassungsvorrichtung (10) nach einem der vorstehenden Aspekte, wobei die Signalgebereinrichtung (22) zur Ausgabe wenigstens eines Beibehaltungs- und/oder Veränderungssignals in Abhängigkeit einer bereits erfassten und/oder vorabberechneten Anzahl von Transpondern (12) während eines Lesevorgangs innerhalb des Lesebereichs (20) ausgebildet ist, insbesondere in Abhängigkeit einer erfassten und/oder vorabberechneten Anzahl von Transpondern (12) während eines Lesevorgangs in einer Vorfeldzone (36) und/oder einer Kernerfassungszone (30) des Lesebereichs (20)und/oder dass die Signalgebereinrichtung (22) zur Ausgabe wenigstens eines Beibehaltungs- und/oder Veränderungssignals in Abhängigkeit einer vorab und/oder fortlaufend geschätzten und/oder qualitativ ermittelten Anzahl von Transpondern (12) ausgebildet ist.

Ein vierter Aspekt betrifft eine Erfassungsvorrichtung (10) nach einem der vorstehenden Aspekte, wobei das Beibehaltungs- und/oder Veränderungssignal eine qualitative Ausprägung aufweist und/oder an eine Bedienperson gerichtet ist, insbesondere zur indirekten und/oder adaptiven Steuerung und/oder Beeinflussung der Warengeschwindigkeit und/oder -beschleunigung und/oder -verweilzeit innerhalb des Lesebereichs (20)und/oder dass die Signalgebereinrichtung (22) dazu ausgebildet ist, ein Beibehaltungs- und/oder Beschleunigungssignal auszugeben, wenn die Warenbewegung durch den Lesebereich (20), insbesondere in einer Vorfeldzone (36, 38) und/oder einer Kernerfassungszone (30) des Lesebereichs (20), eine vordefinierte Geschwindigkeitsschwelle unterschreitet oder gleich ist.

Ein fünfter Aspekt betrifft eine Erfassungsvorrichtung (10) nach einem der vorstehenden Aspekte, wobei die Signalgebereinrichtung (22) dazu ausgebildet ist, ein Beibehaltungs- und/oder Beschleunigungssignal auszugeben, wenn ein Lesevorgang noch während des Hindurchbewegens von Waren (14) durch den Lesebereich (20) abgeschlossen ist oder abgeschlossen sein wird und/oder dass die Signalgebereinrichtung (22) dazu ausgebildet ist, ein Verlangsamungs- und/oder Entschleunigungssignal auszugeben, wenn die Warenbewegung durch den Lesebereich (20), insbesondere in einer Vorfeldzone (36, 38) und/oder einer Kernerfassungszone (30) des Lesebereichs (20), eine vordefinierte Geschwindigkeitsschwelle überschreitet.

Ein sechster Aspekt betrifft eine Erfassungsvorrichtung (10) nach einem der vorangehenden Aspekte, wobei dass eine Tunnelstruktur (24) den Lesebereich (20) zumindest abschnittsweise seitlich und/oder dachseitig begrenzt und/oder dass der Lesebereich (20) während eines Lesevorgangs zumindest durch eine Tunnelstruktur (24) abgeschirmt ist, insbesondere seitlich und/oder dachseitig gegenüber elektromagnetischen Signalen abgeschirmt ist, und/oder dass der Eingang (26) und der Ausgang (28) der Tunnelstruktur (24) in Warenbewegungsrichtung (72) gegenüberliegend angeordnet sind und/oder dass die Tunnelstruktur (24) einen geradlinig verlaufenden Durchgang definiert und/oder dass die Tunnelstruktur (24) modular und/oder variabel ausgebildet ist, insbesondere zur variablen Anpassung durch eine Bedienperson, und/oder dass die Tunnelstruktur (24) eine variable Länge aufweist und/oder klappbare und/oder ausziehbare Wände aufweist und/oder dass die Tunnelstruktur (24) zumindest abschnittsweise frei von Dachabschnitten ausgebildet ist oder je nach Anwendungskonfiguration abschnittsweise frei von Dachabschnitten ausgebildet sein kann.

Ein siebter Aspekt betrifft eine Erfassungsvorrichtung (10) nach einem der vorstehenden Aspekte, wobei der Lesebereich (20) und/oder die Tunnelstruktur (24) für das manuelle und/oder semimanuelle Hindurchschieben eines Rollbehälters (16) und/oder Gitterwagens und/oder eines standardisierten Transportbehälters und/oder von Stapelware, insbesondere in standardisierten Gebinden, durch eine Bedienperson oder durch mehrere Bedienpersonen ausgebildet und/oder dimensioniert ist.

Ein achter Aspekt betrifft eine Erfassungsvorrichtung (10) nach einem der vorstehenden Aspekte, wobei der Lesebereich (20) wenigstens eine Kernerfassungszone (30) für die Erfassung von Transpondern (12) durch die Leseeinrichtung (18) aufweist, wobei die Kernerfassungszone (30) bevorzugt vollständig innerhalb der Tunnelstruktur (24) angeordnet ist und/oder eine geringe Länge aufweist als die Tunnelstruktur (24).

Ein neunter Aspekt betrifft eine Erfassungsvorrichtung (10) nach einem der vorstehenden Aspekte, wobei der Lesebereich (24) durch wenigstens eine Reflexions- und/oder Absorptionszone (32, 34) unterbrochen ist, insbesondere zur gezielten Reflexion und/oder Absorption elektromagnetischer Strahlung und/oder von Feldern aus der Kernerfassungszone (30), und/oder dass der Lesebereich (20) durch mehrere Reflexions- und/oder Absorptionszonen (32, 34) unterbrochen ist und/oder dass eine Kernerfassungszone (30) zwischen zwei und/oder angrenzend an zwei Reflexions- und/oder Absorptionszonen (32, 34) angeordnet ist und/oder dass die wenigstens eine Reflexions- und/oder Absorptionszone (32, 34) frei von Leseeinrichtungen ausgebildet ist und/oder dass zu Waren (14) innerhalb der wenigstens einen Reflexions- und/oder Absorptionszone (32, 34) keine Transpondererfassung erfolgt.

Ein zehnter Aspekt betrifft eine Erfassungsvorrichtung (10) nach einem der vorstehenden Aspekte, wobei der Lesebereich (20) wenigstens eine unabhängig von einer Kernerfassungszone (30) und/oder unabhängig von einer Reflexions- und/oder Absorptionszone (32, 34) ausgebildete Vorfeldzone (36, 38) aufweist, insbesondere eine außerhalb der Tunnelstruktur (24) angeordnete Vorfeldzone (36, 38).

Ein elfter Aspekt betrifft eine Erfassungsvorrichtung (10) nach einem der vorstehenden Aspekte, wobei wenigstens eine Vorfeldzone des Lesebereichs für die Erfassung von Transpondern ausgebildet ist und/oder dass wenigstens eine Vorfeldzone (36, 38) des Lesebereichs (20) als Sicherheitszone ausgebildet ist, insbesondere für die Erfassung und/oder Korrektur von Falschlesungen vor, während und/oder nach einem Lesevorgang in einer Kernerfassungszone (30) und/oder dass wenigstens eine Vorfeldzone (36, 38) des Lesebereichs (20) für die qualitative Vorerfassung einer Transponderanzahl ausgebildet ist, insbesondere bei Beginn einer Passage durch den Lesebereich (20) und/oder dass wenigstens eine Vorfeldzone (36, 38) des Lesebereichs (20) für die Erfassung von Fremdobjekten und/oder Fremdtranspondern und/oder unzulässigen Behältern und/oder Behälterarten und/oder einer unzulässigen Behälteranzahl ausgebildet ist.

Ein zwölfter Aspekt betrifft eine Erfassungsvorrichtung (10) nach einem der vorstehenden Aspekte, wobei wenigstens eine Vorfeldzone (36, 38) des Lesebereichs (20) für die Geschwindigkeits-, Beschleunigungs- und/oder Positionserfassung von Waren (14) ausgebildet ist, insbesondere zur Vorkonfiguration eines Lesevorgangs innerhalb einer Kernerfassungszone (30) und/oder zur Vorkonfiguration der Signalgebereinrichtung (22).

Ein dreizehnter Aspekt betrifft eine Erfassungseinrichtung (10) nach einem der vorangehenden Aspekte, wobei die Leseeinrichtung (18) dazu eingerichtet ist, den Lesevorgang abzubrechen und/oder das Leseergebnis zu verwerfen, wenn die zu erfassenden Waren (14) den Ausgang (28) des Lesebereichs (20) vor vollständigem Abschluss des Lesevorgangs passieren.

Ein vierzehnter betrifft eine Erfassungsvorrichtung (10) nach einem der vorangehenden Aspekte, wobei die Leseeinrichtung (18) jeweils mindestens eine als aktive oder passive Richtantenne ausgebildete Leseeinheit (46, 48) für die Erfassung und/oder zur gezielten Störung oder temporären Deaktivierung in einer Vorfeldzone (36, 38) des Lesebereichs (20) aufweist, und/oder wobei wenigstens eine Sensorvorrichtung (56, 58, 60, 62, 64), insbesondere Positionssensor, zur Erfassung einer Waren- und/oder Behälterposition und/oder zur Geschwindigkeits- und/oder Beschleunigungserfassung innerhalb des Lesebereichs (20), insbesondere innerhalb einer Kernerfassungszone (20), einer Vorfeldzone (36, 38) und/oder einer Reflexions- und/oder Absorptionszone (32, 34).

Ein fünfzehnter Aspekt betrifft eine Erfassungsvorrichtung (10) nach einem der vorangehenden Aspekte, wobei die Leseeinrichtung (18) eine RFID-Lesevorrichtung (50) und/oder eine Steuer- und/oder Auswerteeinheit (52) aufweist, die mit einem Modul für künstliche Intelligenz ausgestattet ist, insbesondere zur Ansteuerung der Leseeinheiten (40, 42, 44, 46, 48), der Signalgebereinrichtung (22), der Bedieneinrichtung (66, 68), der Sensorvorrichtungen (56, 58, 60, 62, 64) und/oder dass die Steuer- und/oder Auswerteeinheit (52) und/oder das KI-Modul zur eigenständigen Analyse, Filterung, Bewertung, Prognose, Korrekturberechnung, Speicherung und/oder Übermittlung erfasster und/oder berechneter Daten an übergeordnete IT-Struktur ausgebildet ist.

Ein weiterer unabhängiger Aspekt der vorliegenden Erfindung betrifft ein Verfahren zur Bulk-Erfassung von mit Transpondern (12) versehenen Waren (14), bei dem eine Vielzahl von mit Transpondern (12) versehenen Waren (14) manuell in einem Lesebereich (20) einer Erfassungsvorrichtung (10) positioniert und Hindurchbewegt wird, bei dem wenigstens eine Leseeinrichtung (18) die Transponder (12) der Waren (14) berührungslos identifiziert und bei dem eine Signalgebereinrichtung (22) wenigstens ein Beibehaltungs- und/oder Veränderungssignal betreffend die Warengeschwindigkeit und/oder -beschleunigung innerhalb des Lesebereichs (20) ausgibt.

### Bezugszeichenliste

- 10: Erfassungsvorrichtung
- 12: Transponder
- 14: Waren
- 16: Rollcontainer
- 18: Leseeinrichtung
- 20: Lesebereich
- 22: Signalgebereinrichtung
- 24: Tunnelstruktur
- 26: Eingang
- 28: Ausgang
- 30: Kernerfassungszone
- 32: Reflexions- und/oder Absorptionszone
- 34: Reflexions- und/oder Absorptionszone
- 36: Vorfeld-Eingangszone
- 38: Vorfeld-Ausgangszone
- 40: Leseeinheit in Kernerfassungszone
- 42: Leseeinheit in Kernerfassungszone
- 44: Leseeinheit in Kernerfassungszone
- 46: Leseeinheit in und/oder an Vorfeld-Eingangszone 36
- 48: Leseeinheit in und/oder an Vorfeld-Ausgangszone 38
- 50: RFID-Lesevorrichtung
- 52: Steuer- und/oder Auswerteeinheit
- 54: Datenbank
- 56: Sensorvorrichtung
- 58: Sensorvorrichtung
- 60: Sensorvorrichtung
- 62: Sensorvorrichtung
- 64: Sensorvorrichtung
- 66: Bedieneinrichtung (eingangsseitig)
- 68: Bedieneinrichtung (ausgangsseitig)
- 70: Außenzone
- 72: Bewegungsrichtung des Rollcontainers 16

## Patentansprüche

1. Erfassungsvorrichtung (10), insbesondere für die Bulk-Erfassung von mit Transpondern (12) versehenen Waren (14),
- mit wenigstens einer Leseeinrichtung (18) zur berührungslosen Identifikation von Transpondern (12),
- mit einem Lesebereich (20), der zumindest abschnittsweise innerhalb der Reichweite der Leseeinrichtung (18) verläuft und der für das manuelle Hindurchbewegen von Waren (14) zur Bulk-Erfassung durch die Leseeinrichtung (18) ausgebildet ist, und
- mit einer Signalgebereinrichtung (22) zur Ausgabe wenigstens eines Beibehaltungs- und/oder Veränderungssignals betreffend die Warengeschwindigkeit und/oder -beschleunigung innerhalb des Lesebereichs (20),
- wobei der Lesebereich (20) wenigstens eine Kernerfassungszone (30) für die Erfassung von Transpondern (12) durch die Leseeinrichtung (18) aufweist,
- wobei der Lesebereich (20) wenigstens eine unabhängig von einer Kernerfassungszone (30) ausgebildete Vorfeldzone (36, 38) aufweist,
- wobei wenigstens eine Vorfeldzone (36, 38) des Lesebereichs (20) als Sicherheitszone für die Erfassung und Korrektur von Falschlesungen vor, während und/oder nach einem Lesevorgang in einer Kernerfassungszone (30) ausgebildet ist.

2. Erfassungsvorrichtung (10) nach Anspruch 1, **dadurch gekennzeichnet, dass** die Signalgebereinrichtung (22) zur Ausgabe wenigstens eines Beibehaltungs- und/oder Veränderungssignals in Abhängigkeit einer Geschwindigkeits-, Beschleunigungs- und/oder Positionserfassung von Waren (14) innerhalb des Lesebereichs (20) ausgebildet ist.

3. Erfassungsvorrichtung (10) nach Anspruch 1 oder 2, **dadurch gekennzeichnet, dass** die Signalgebereinrichtung (22) zur Ausgabe wenigstens eines Beibehaltungs- und/oder Veränderungssignals in Abhängigkeit einer bereits erfassten und/oder vorabberechneten Anzahl von Transpondern (12) während eines Lesevorgangs innerhalb des Lesebereichs (20) ausgebildet ist, insbesondere in Abhängigkeit einer erfassten und/oder vorabberechneten Anzahl von Transpondern (12) während eines Lesevorgangs in einer Vorfeldzone (36) und/oder einer Kernerfassungszone (30) des Lesebereichs (20) und/oder dass die Signalgebereinrichtung (22) zur Ausgabe wenigstens eines Beibehaltungs- und/oder Veränderungssignals in Abhängigkeit einer vorab und/oder fortlaufend geschätzten und/oder qualitativ ermittelten Anzahl von Transpondern (12) ausgebildet ist.

4. Erfassungsvorrichtung (10) nach einem der vorstehenden Ansprüche, **dadurch gekennzeichnet, dass** das Beibehaltungs- und/oder Veränderungssignal eine qualitative Ausprägung aufweist und/oder an eine Bedienperson gerichtet ist, insbesondere zur indirekten und/oder adaptiven Steuerung und/oder Beeinflussung der Warengeschwindigkeit und/oder -beschleunigung und/oder -verweilzeit innerhalb des Lesebereichs (20)und/oder dass die Signalgebereinrichtung (22) dazu ausgebildet ist, ein Beibehaltungs- und/oder Beschleunigungssignal auszugeben, wenn die Warenbewegung durch den Lesebereich (20), insbesondere in einer Vorfeldzone (36, 38) und/oder einer Kernerfassungszone (30) des Lesebereichs (20), eine vordefinierte Geschwindigkeitsschwelle unterschreitet oder gleich ist.

5. Erfassungsvorrichtung (10) nach einem der vorstehenden Ansprüche, **dadurch gekennzeichnet, dass** die Signalgebereinrichtung (22) dazu ausgebildet ist, ein Beibehaltungs- und/oder Beschleunigungssignal auszugeben, wenn ein Lesevorgang noch während des Hindurchbewegens von Waren (14) durch den Lesebereich (20) abgeschlossen ist oder abgeschlossen sein wird und/oder dass die Signalgebereinrichtung (22) dazu ausgebildet ist, ein Verlangsamungs- und/oder Entschleunigungssignal auszugeben, wenn die Warenbewegung durch den Lesebereich (20), insbesondere in einer Vorfeldzone (36, 38) und/oder einer Kernerfassungszone (30) des Lesebereichs (20), eine vordefinierte Geschwindigkeitsschwelle überschreitet.

6. Erfassungsvorrichtung (10) nach einem der vorangehenden Ansprüche, **dadurch gekennzeichnet, dass** eine Tunnelstruktur (24) den Lesebereich (20) zumindest abschnittsweise seitlich und/oder dachseitig begrenzt und/oder dass der Lesebereich (20) während eines Lesevorgangs zumindest durch eine Tunnelstruktur (24) abgeschirmt ist, insbesondere seitlich und/oder dachseitig gegenüber elektromagnetischen Signalen abgeschirmt ist, und/oder dass der Eingang (26) und der Ausgang (28) der Tunnelstruktur (24) in Warenbewegungsrichtung (72) gegenüberliegend angeordnet sind und/oder dass die Tunnelstruktur (24) einen geradlinig verlaufenden Durchgang definiert und/oder dass die Tunnelstruktur (24) modular und/oder variabel ausgebildet ist, insbesondere zur variablen Anpassung durch eine Bedienperson, und/oder dass die Tunnelstruktur (24) eine variable Länge aufweist und/oder klappbare und/oder ausziehbare Wände aufweist und/oder dass die Tunnelstruktur (24) zumindest abschnittsweise frei von Dachabschnitten ausgebildet ist oder je nach Anwendungskonfiguration abschnittsweise frei von Dachabschnitten ausgebildet sein kann.

7. Erfassungsvorrichtung (10) nach einem der vorstehenden Ansprüche, **dadurch gekennzeichnet, dass** der Lesebereich (20) und/oder die Tunnelstruktur (24) für das manuelle und/oder semimanuelle Hindurchschieben eines Rollbehälters (16) und/oder Gitterwagens und/oder eines standardisierten Transportbehälters und/oder von Stapelware, insbesondere in standardisierten Gebinden, durch eine Bedienperson oder durch mehrere Bedienpersonen ausgebildet und/oder dimensioniert ist.

8. Erfassungsvorrichtung (10) nach einem der vorstehenden Ansprüche, **dadurch gekennzeichnet, dass** die Kernerfassungszone (30) vollständig innerhalb der Tunnelstruktur (24) angeordnet ist und/oder eine geringe Länge aufweist als die Tunnelstruktur (24).

9. Erfassungsvorrichtung (10) nach einem der vorstehenden Ansprüche, **dadurch gekennzeichnet, dass** der Lesebereich (24) durch wenigstens eine Reflexions- und/oder Absorptionszone (32, 34) unterbrochen ist, insbesondere zur gezielten Reflexion und/oder Absorption elektromagnetischer Strahlung und/oder von Feldern aus der Kernerfassungszone (30), und/oder dass der Lesebereich (20) durch mehrere Reflexions- und/oder Absorptionszonen (32, 34) unterbrochen ist und/oder dass eine Kernerfassungszone (30) zwischen zwei und/oder angrenzend an zwei Reflexions- und/oder Absorptionszonen (32, 34) angeordnet ist und/oder dass die wenigstens eine Reflexions- und/oder Absorptionszone (32, 34) frei von Leseeinrichtungen ausgebildet ist und/oder dass zu Waren (14) innerhalb der wenigstens einen Reflexions- und/oder Absorptionszone (32, 34) keine Transpondererfassung erfolgt.

10. Erfassungsvorrichtung (10) nach einem der vorstehenden Ansprüche, **dadurch gekennzeichnet, dass** der Lesebereich (20) wenigstens eine unabhängig von einer Reflexions- und/oder Absorptionszone (32, 34) ausgebildete Vorfeldzone (36, 38) aufweist, insbesondere eine außerhalb der Tunnelstruktur (24) angeordnete Vorfeldzone (36, 38).

11. Erfassungsvorrichtung (10) nach einem der vorstehenden Ansprüche, **dadurch gekennzeichnet, dass** wenigstens eine Vorfeldzone (36, 38) des Lesebereichs (20) für die qualitative Vorerfassung einer Transponderanzahl ausgebildet ist, insbesondere bei Beginn einer Passage durch den Lesebereich (20) und/oder dass wenigstens eine Vorfeldzone (36, 38) des Lesebereichs (20) für die Erfassung von Fremdobjekten und/oder Fremdtranspondern und/oder unzulässigen Behältern und/oder Behälterarten und/oder einer unzulässigen Behälteranzahl ausgebildet ist.

12. Erfassungsvorrichtung (10) nach einem der vorstehenden Ansprüche, **dadurch gekennzeichnet, dass** wenigstens eine Vorfeldzone (36, 38) des Lesebereichs (20) für die Geschwindigkeits-, Beschleunigungs- und/oder Positionserfassung von Waren (14) ausgebildet ist, insbesondere zur Vorkonfiguration eines Lesevorgangs innerhalb einer Kernerfassungszone (30) und/oder zur Vorkonfiguration der Signalgebereinrichtung (22).

13. Erfassungseinrichtung (10) nach einem der vorangehenden Ansprüche, **dadurch gekennzeichnet, dass** die Leseeinrichtung (18) dazu eingerichtet ist, den Lesevorgang abzubrechen und/oder das Leseergebnis zu verwerfen, wenn die zu erfassenden Waren (14) den Ausgang (28) des Lesebereichs (20) vor vollständigem Abschluss des Lesevorgangs passieren.

14. Erfassungsvorrichtung (10) nach einem der vorangehenden Ansprüche, **dadurch gekennzeichnet, dass** die Leseeinrichtung (18) jeweils mindestens eine als aktive oder passive Richtantenne ausgebildete Leseeinheit (46, 48) für die Erfassung und/oder zur gezielten Störung oder temporären Deaktivierung in einer Vorfeldzone (36, 38) des Lesebereichs (20) aufweist, und/oder **gekennzeichnet durch** wenigstens eine Sensorvorrichtung (56, 58, 60, 62, 64), insbesondere Positionssensor, zur Erfassung einer Waren- und/oder Behälterposition und/oder zur Geschwindigkeits- und/oder Beschleunigungserfassung innerhalb des Lesebereichs (20), insbesondere innerhalb einer Kernerfassungszone (20), einer Vorfeldzone (36, 38) und/oder einer Reflexions- und/oder Absorptionszone (32, 34).

15. Erfassungsvorrichtung (10) nach einem der vorangehenden Ansprüche, **dadurch gekennzeichnet, dass** die Leseeinrichtung (18) eine RFID-Lesevorrichtung (50) und/oder eine Steuer- und/oder Auswerteeinheit (52) aufweist, die mit einem Modul für künstliche Intelligenz ausgestattet ist, insbesondere zur Ansteuerung der Leseeinheiten (40, 42, 44, 46, 48), der Signalgebereinrichtung (22), der Bedieneinrichtung (66, 68), der Sensorvorrichtungen (56, 58, 60, 62, 64) und/oder dass die Steuer- und/oder Auswerteeinheit (52) und/oder das KI-Modul zur eigenständigen Analyse, Filterung, Bewertung, Prognose, Korrekturberechnung, Speicherung und/oder Übermittlung erfasster und/oder berechneter Daten an übergeordnete IT-Struktur ausgebildet ist.

16. Verfahren zur Bulk-Erfassung von mit Transpondern (12) versehenen Waren (14),
- bei dem eine Vielzahl von mit Transpondern (12) versehenen Waren (14) manuell in einem Lesebereich (20) einer Erfassungsvorrichtung (10) positioniert und Hindurchbewegt wird,
- bei dem wenigstens eine Leseeinrichtung (18) die Transponder (12) der Waren (14) berührungslos identifiziert,
- bei dem eine Signalgebereinrichtung (22) wenigstens ein Beibehaltungs- und/oder Veränderungssignal betreffend die Warengeschwindigkeit und/oder -beschleunigung innerhalb des Lesebereichs (20) ausgibt und
- bei dem in wenigstens einer Vorfeldzone (36, 38) des Lesebereichs (20), die als Sicherheitszone ausgebildet ist, Falschlesungen vor, während und/oder nach einem Lesevorgang in einer Kernerfassungszone (30) erfasst und korrigiert werden.
